# EUROPEAN PATENT APPLICATION

(11) **EP 2 641 873 A1**
(43) Date of publication of application: **25.09.2013**
(21) Application number: 13170621.0
(22) Date of filing: 28.01.2009
(51) Int. Cl.: C02F 1/44, B01D 61/02

(54) **Reverse osmosis system**

(30) Priority: 28.01.2008 US 62611
(62) Divisional of application: 09705352.4
(71) Applicant: Everpure LLC, Hanover Park, IL 60133 (US)
(72) Inventor: Saveliev, Michael, Huntington Beach, CA 92649, CA California (US); Carlson, Kevin, Chino Hills, CA 91709, CA California (US); Jersey, Steven T., Laguna Niguel, CA 92677, CA California (US); Burban, John H., Lake Elmo, MN 55042, MN Minnesota (US); Shanahan, John, White Bear Lake, MN 55110, MN Minnesota (US); Averbeck, David J., Dousman, WI 53115, WI Wisconsin (US); Adam, Tyler L., Cleveland, WI 53015, WI Wisconsin (US); Peterson, Kenneth A., Temecula, CA 92591, CA California (US)
(74) Representative: BOVARD AG

(57) **Abstract**

Embodiments of the invention provide a reverse osmosis system including a feed water inlet, a reverse osmosis module coupled to the feed water inlet, and at least one blend valve. The blend valve can be coupled to a permeate outlet and the feed water inlet and can be capable of blending the feed water and the permeate water to produce mixed water. The blend valve can be adjusted to achieve a desired TDS level in the mixed water.

## Description

### RELATED APPLICATIONS

This application claims priority under 35 U.S.C. § 119 to United States Provisional Patent Application No. 61/062,611 filed on January 28, 2008, the entire contents of which is incorporated herein by reference.

### BACKGROUND

Water purification systems are used to provide high-quality drinking water. Reverse osmosis systems are widely used to deliver purified water in households and commercial beverage systems. Typical arrangements include a storage tank with a bladder in which purified water is stored under pressure. During the purification process, water flowing through a reverse osmosis membrane experiences a pressure drop. With increasing fluid levels in the storage tank, the pressure in a purified water line connecting the reverse osmosis membrane to the storage tank also increases. As a result, the purified water must flow against a "back pressure" resulting in a decrease in flow rate of the purified water. With an almost full tank, less than 10% of the incoming raw water is purified by the reverse osmosis membrane and stored in the storage tank, while over 90% of the water is not used and drained from the system as so-called concentrate.

Some reverse osmosis systems use a number of pumps in order to reduce the water being drained from the system. The pumps can be used to increase the pressure upstream of the reverse osmosis membrane. Other systems use a pump to recycle the concentrate back into the system upstream of the reverse osmosis system. These pumps are driven by electric motors, which increase the overall size, weight, and energy consumption of the reverse osmosis system. As a result, installation of reverse osmosis systems can require significant on-site assembly and a team of technicians due to the size and the weight of the systems.

Atmospheric tanks are also commonly used in reverse osmosis systems to reduce the water waste. Their advantage lies in the fact that the purified water does not have to flow against the increasing back pressure, resulting in fewer variations in the flow rate of the purified water. Their disadvantages lie in the fact that powerful pumps are required to extract water from atmospheric tanks over a wide range of flow rates.

Permeate water produced by reverse osmosis systems have a very low mineral content or a low total dissolved solids (TDS) level. Beverages prepared with the permeate water can lack the taste associated with the minerals. If the permeate water is used for drinking purposes, minerals are often added back into the permeate water downstream of the reverse osmosis membrane. Calcite sticks can be used to re-mineralize permeate water. However, a concentration of minerals achieved with this approach can be variable, and this concentration is not easily adjusted to meet specific TDS concentrations.

### SUMMARY

Some embodiments of the invention provide a reverse osmosis system as recited in claim 1.

Some embodiments of the invention provide a reverse osmosis system including a feed water inlet, a reverse osmosis module coupled to the feed water inlet, and one or more blend valves. The reverse osmosis module can include a permeate outlet, through which permeate water can exit the reverse osmosis module. The blend valve can be coupled to the permeate outlet and the feed water inlet and can be capable of blending the feed water and the permeate water to produce mixed water. The blend valve can be adjusted to achieve a desired TDS level in the mixed water.

Some embodiments of the invention provide a reverse osmosis system including a reverse osmosis module having a reverse osmosis membrane, a boost pump to provide feed water to the reverse osmosis membrane, and a permeate pump to remove permeate water from the reverse osmosis membrane. The boost pump and the permeate pump can be driven by a common motor with two output shafts.

Some embodiments of the invention provide a reverse osmosis system including a reverse osmosis module and a pressure tank coupled to a permeate outlet. The reverse osmosis membrane can be flushed with permeate water after there has been substantially no demand for permeate water, but before an induction time for scaling has elapsed.

### DESCRIPTION OF THE DRAWINGS

FIG. 1 is a perspective view of a reverse osmosis system according to one embodiment of the invention.
FIG. 2 is a perspective view of a reverse osmosis system configured according to another embodiment of the invention.
FIG. 3 is another perspective view of the reverse osmosis system of FIG. 1.
FIG. 4 is another perspective view of the reverse osmosis system of FIG. 1.
FIG. 5 is another perspective view of the reverse osmosis system of FIG. 1.
FIG. 6 is another perspective view of the reverse osmosis system of FIG. 1.
FIG. 7 is another perspective view of the reverse osmosis system of FIG. 1.
FIG. 8 is a detailed perspective view of manifolds of the reverse osmosis system of FIG. 1.
FIG. 9A is a front view of a reverse osmosis system according to another embodiment of the invention.
FIG. 9B is a side view of the reverse osmosis system of FIG. 9A.
FIG. 9C is a top view of the reverse osmosis system of FIG. 9A.
FIG. 10 is a schematic illustration of a flow path including control circuitry according to one embodiment of the invention.
FIG. 11A is a cross-sectional view of a reverse osmosis module according to one embodiment of the invention.
FIG. 11B is a cross-sectional view of a reverse osmosis module according to another embodiment of the invention.
FIG. 11C is a cross-sectional view of a reverse osmosis module according to another embodiment of the invention.
FIG. 11D is a cross-sectional view of the reverse osmosis module of FIG. 11C according to one embodiment of the invention.
FIG. 11E is a cross-sectional view of the reverse osmosis module of FIG. 11C according to another embodiment of the invention.
FIG. 12A is a front view of the reverse osmosis system of FIG. 9A illustrating an overview of major components of the reverse osmosis system of FIG. 9A.
FIG. 12B is a left side view of the reverse osmosis system of FIG. 12A.
FIG. 12C is a right side view of the reverse osmosis system of FIG. 12A.
FIG. 13A is a schematic illustration of a flow path according to one embodiment of the invention.
FIG. 13B is a schematic illustration of a flow path according to another embodiment of the invention.
FIG. 14A is a schematic illustration of a flow path for a reverse osmosis system including a flush line according to one embodiment of the invention.
FIG. 14B is a schematic illustration of a flow path for a reverse osmosis system including a flush line according to another embodiment of the invention.
FIG. 15 is a perspective view of a body of a manifold for use with the reverse osmosis system according to one embodiment of the invention.
FIG. 16A is a perspective top view of a dilution blend valve including the body of FIG. 15 according to one embodiment of the invention.
FIG. 16B is a perspective bottom view of the dilution blend valve of FIG. 16A.
FIG. 17 is a perspective view of a dilution blend valve according to another embodiment of the invention.
FIG. 18 is a perspective view of a variator stud of the dilution blend valve of
FIG. 17.

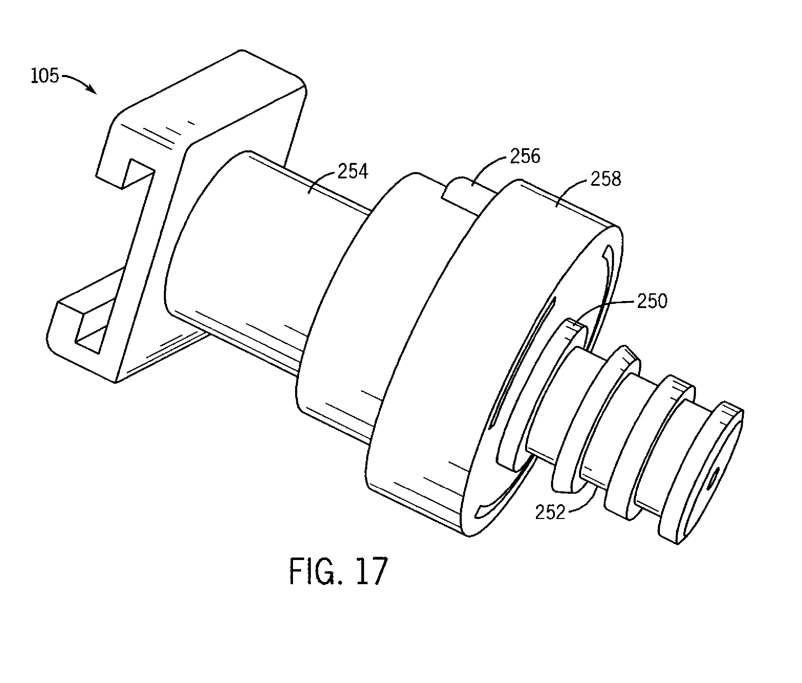

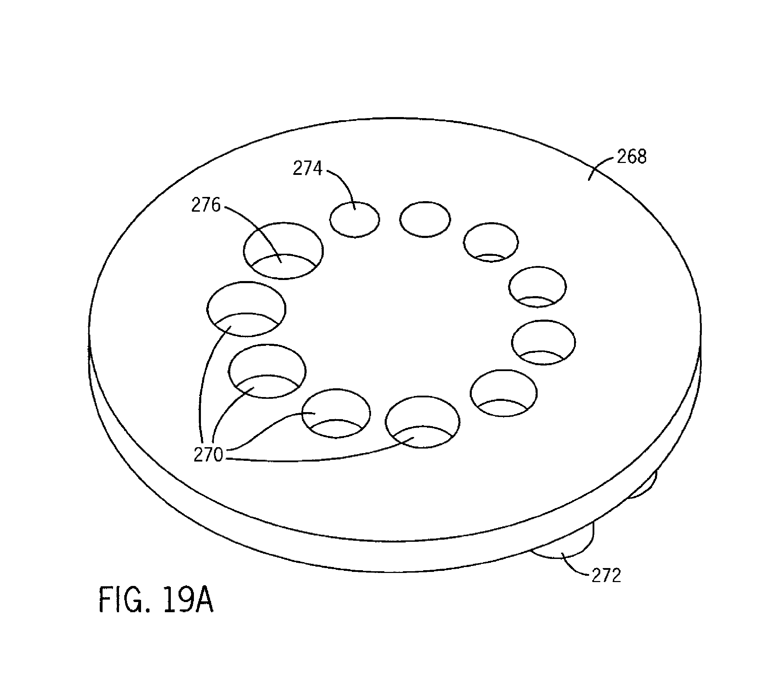

FIG. 19A is a perspective top view of a variator disc for use with the variator stud of FIG. 17.

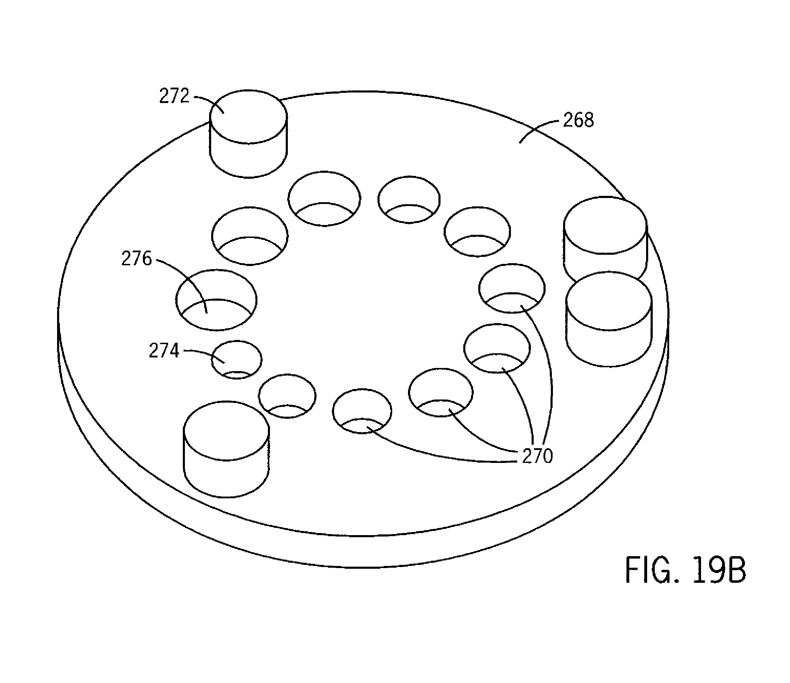

FIG. 19B is a perspective bottom view of the variator disc of FIG. 19A.

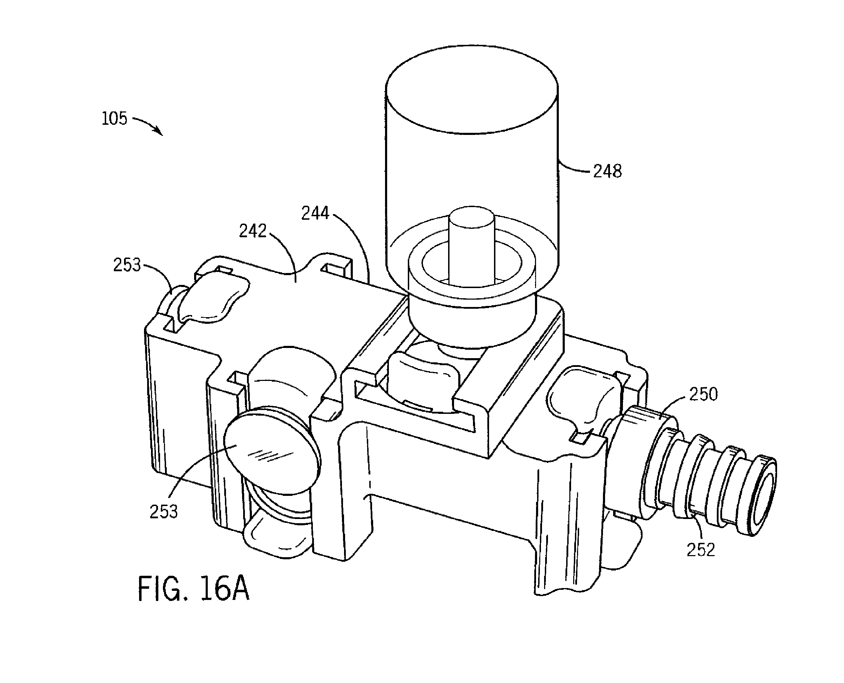

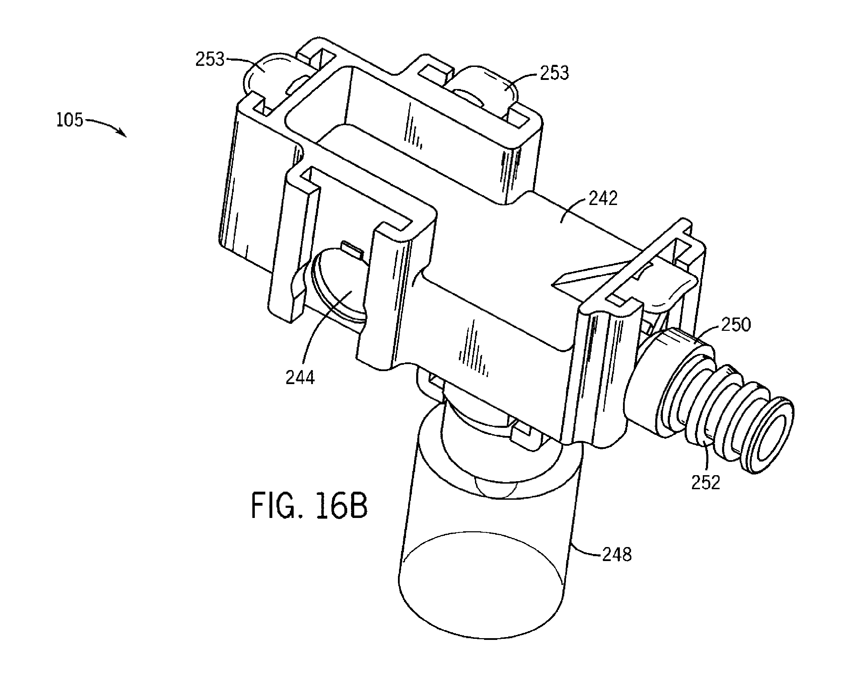

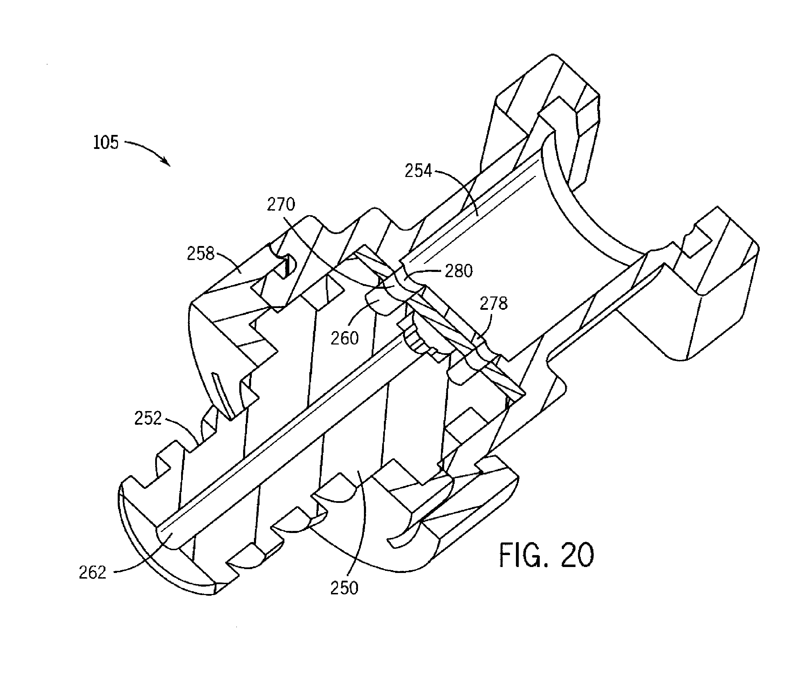

FIG. 20 is a cross-sectional view of the dilution blend valve assembly of FIG. 16.

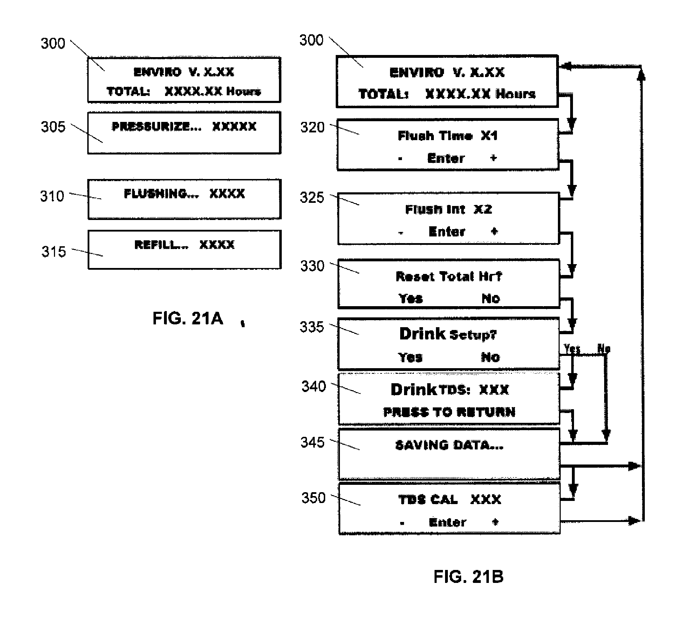

FIG. 21A is a summary of information that can be displayed during operation of the reserve osmosis system according to one embodiment of the invention.
FIG. 21B is a flow chart of a sequence for programming a controller of the reverse osmosis system according to one embodiment of the invention.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting. The use of "'including," "'comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

The following discussion is presented to enable a person skilled in the art to make and use embodiments of the invention. Various modifications to the illustrated embodiments will be readily apparent to those skilled in the art, and the generic principles herein can be applied to other embodiments and applications without departing from embodiments of the invention. Thus, embodiments of the invention are not intended to be limited to embodiments shown, but are to be accorded the widest scope consistent with the principles and features disclosed herein. The following detailed description is to be read with reference to the figures, in which like elements in different figures have like reference numerals. The figures, which are not necessarily to scale, depict selected embodiments and are not intended to limit the scope of embodiments of the invention. Skilled artisans will recognize the examples provided herein have many useful alternatives and fall within the scope of embodiments of the invention.

Some embodiments of the invention provide a reverse osmosis system including a feed water inlet, a reverse osmosis module coupled to the feed water inlet, and one or more blend valves. The reverse osmosis module can include a permeate outlet, through which permeate water can exit the reverse osmosis module. The blend valve can be coupled to the permeate outlet and the feed water inlet and can be capable of blending feed water and permeate water to produce mixed water, with a TDS value anywhere between a TDS value of the feed water and TDS value of the permeate TDS. The blend valve or valves can be manually adjusted at system installation until a TDS level of the mixed water (e.g., measured with a handheld TDS sensor) reaches the desired value. Alternatively, TDS sensors can be incorporated within the reverse osmosis system that sense a current TDS level in the mixed water. The blend valve or valves can be controlled to achieve a desired TDS level in the mixed water.

Some embodiments of the invention provide a reverse osmosis system including a reverse osmosis module, a pressure tank coupled to a permeate outlet, and a permeate flush scheme. During the reverse osmosis process, feed water containing minerals and/or dissolved solids can be pressurized and can be fed to a reverse osmosis membrane. Given sufficient feed water pressure, permeate water (mostly free of minerals and dissolved solids) can pass through the membrane, leaving behind the minerals and/or the dissolved solids. As a result, the feed water stream can become more concentrated in dissolved solids, and this stream is known as concentrate. If enough permeate is forced through the membrane, the dissolved solids content of the concentrate can surpass the mineral's solubility limit and thus mineral precipitation can occur. The ratio of the permeate that is forced through the membrane to the feed water supplied to the membrane is known as membrane recovery.

At a given membrane recovery, the precipitation of the minerals and/or dissolved solids may or may not occur instantly, and if it does not occur instantly, the time lag observed can be termed an induction time. The induction time can be increased by adding anti-scaling chemicals, such as, but not limited to, hexametaphosphate and polymeric acrylic acids. Mineral precipitation within the reverse osmosis membrane can be particularly problematic if the flow through the system is stopped (i.e., when there is no water demand) and the minerals either precipitate on the membrane surface or precipitate from the concentrate stream and deposit on the membrane surface, thus reducing the amount of water that can permeate through the membrane.

In order to maximize the permeate recovery of a reverse osmosis system, but to also ensure that scaling does not occur, a flush scheme can be incorporated into the operation of the RO system. The flush scheme can direct water, which can vary in quality between the feed water and the permeate water, upstream from the pressure tank to the reverse osmosis module in order to flush the reverse osmosis membrane with water. The reverse osmosis membrane can be flushed with water after there has been substantially no demand for mixed water or permeate water, but before an induction time for scaling has elapsed.

The duration of the flush can be such that the concentration of minerals and dissolved solids present in the feed water and the concentrate are equivalent to the concentrations of minerals and dissolved solids in the water used for flushing. Operationally, this can be determined by measuring the TDS level of the concentrate exiting the membrane module, and noting when the TDS level approaches the TDS level of the water used for flushing and thus ending the flush duration.

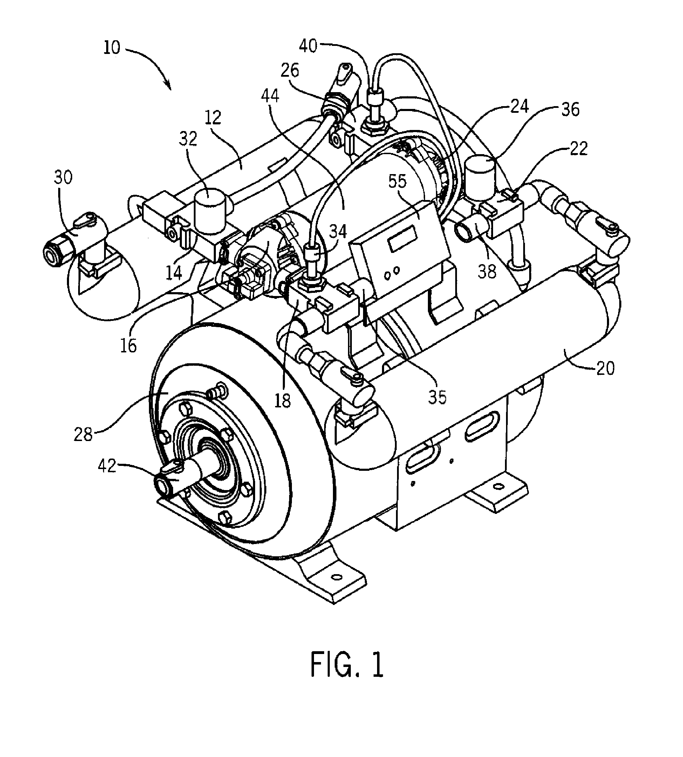

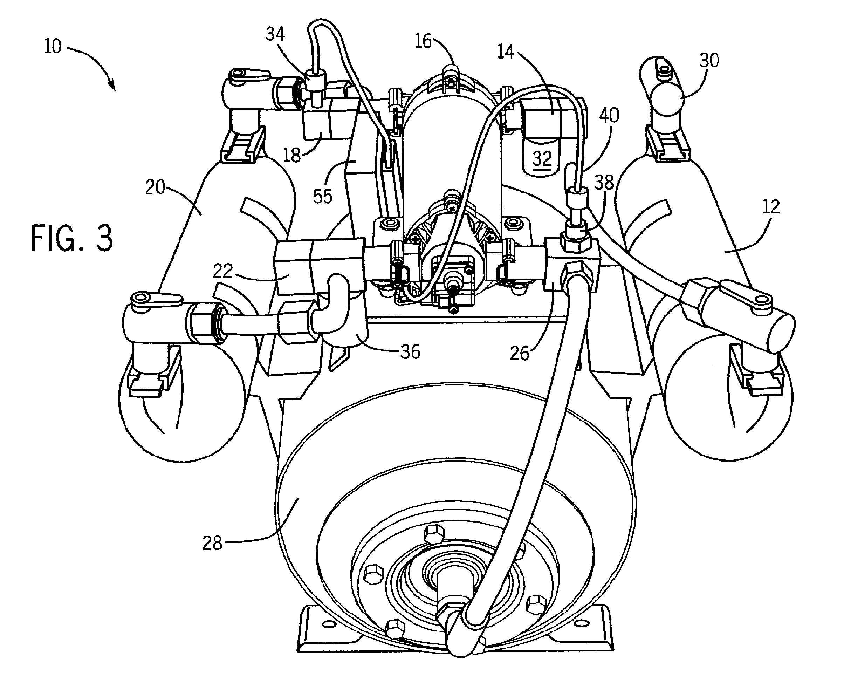

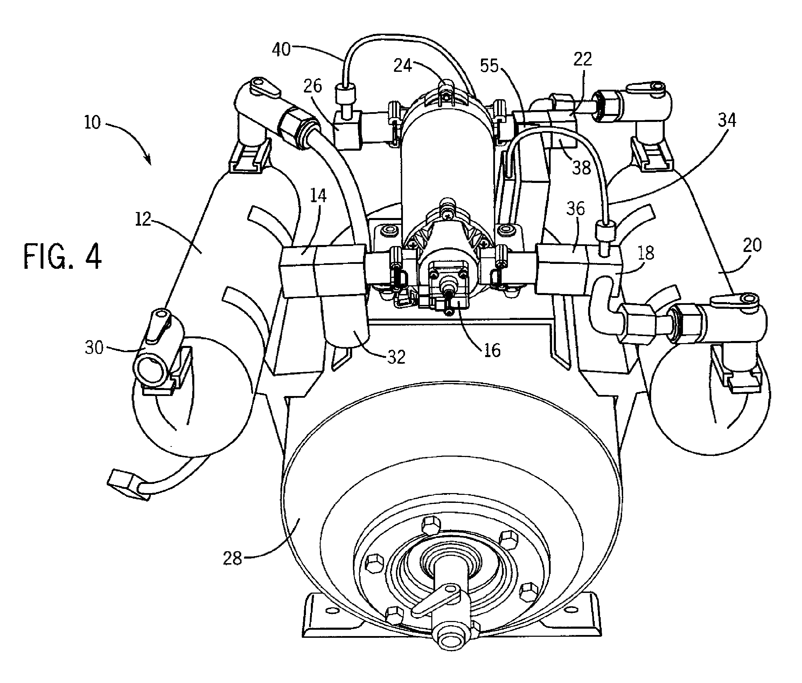

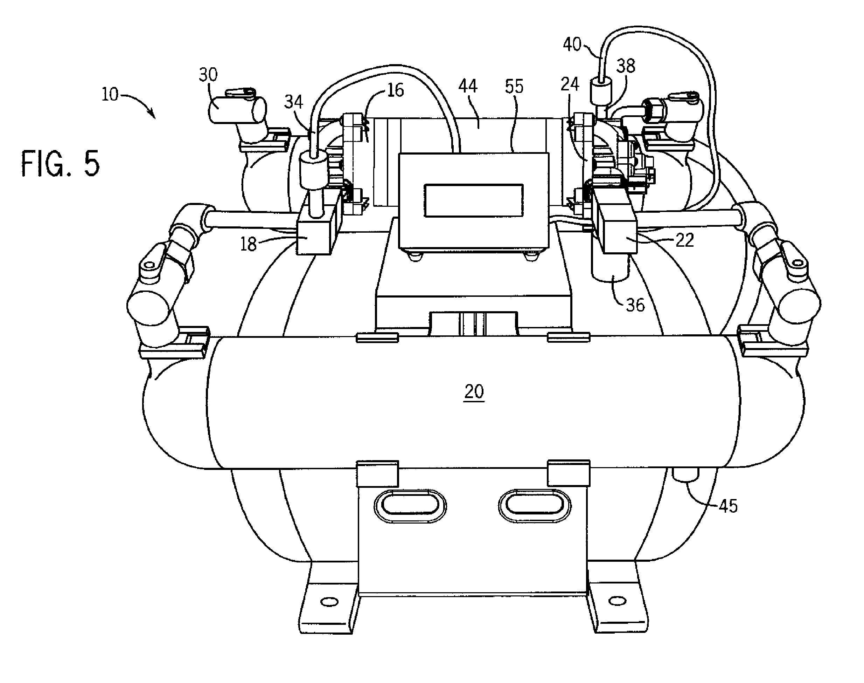

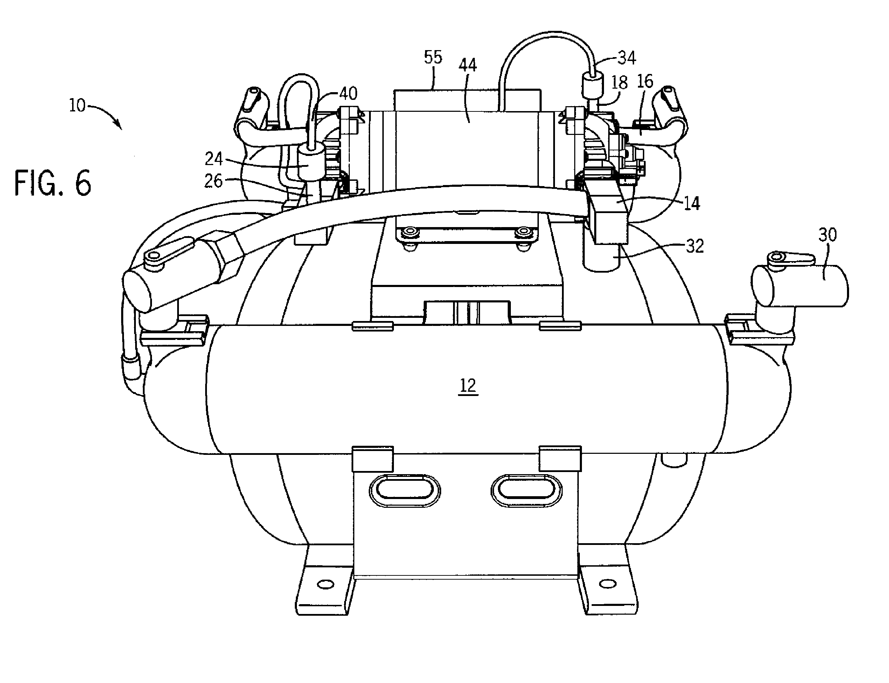

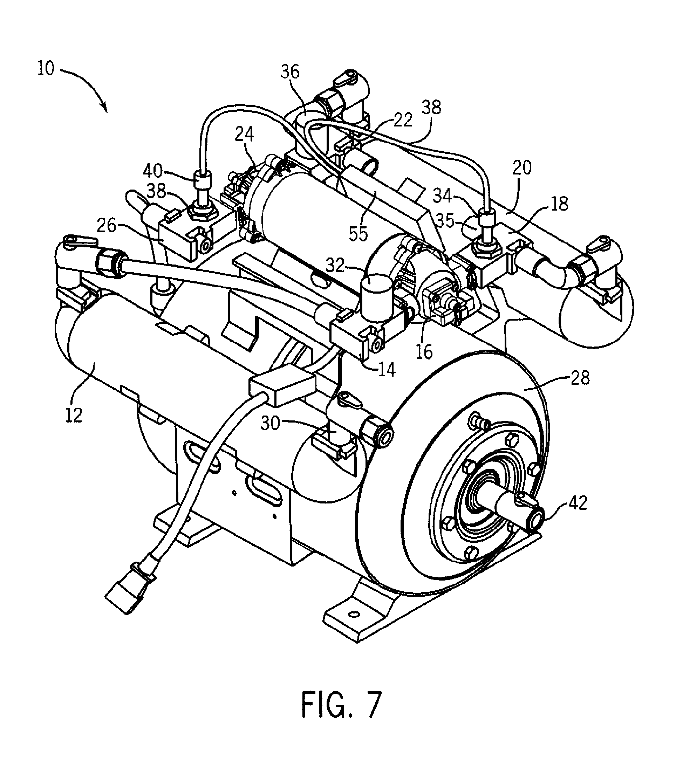

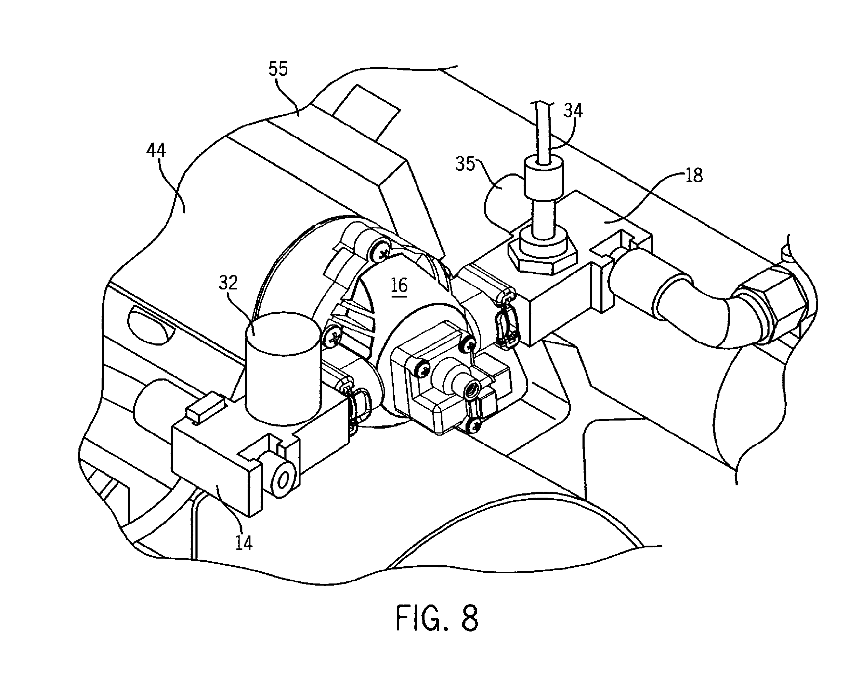

FIGS. 1-8 illustrate a reverse osmosis system 10 according to one embodiment of the invention. The reverse osmosis system 10 can include a carbon filter 12, a fourth manifold 14, a boost pump 16, a second manifold 18, a reverse osmosis module 20, a third manifold 22, a permeate pump 24, a fourth manifold 26, and a pressure tank 28. The reverse osmosis module 20 can also include an anti-scaling agent integral with the module adjacent to the feed port. The carbon filter 12 can include a water inlet 30 for the reverse osmosis system 10. The water inlet 30 can draw water from a municipal or other raw water supplies. A first valve 32 can be coupled to the first manifold 14, as shown in FIGS. 1 and 8. A first Total Dissolved Solids (FDS) sensor 34 and a bypass port 35 can be coupled to the second manifold 18, as shown in FIG. 8. The first TDS sensor 34 can measure the TDS level of the water supply. A second valve 36 and a blend port 38 can be coupled to the third manifold 22. A second TDS sensor 40 can be mounted to the fourth manifold 26. The pressure tank 28 can include a permeate or mixed water outlet 42.

A suitable pressure tank 28 can be the accumulator tank described in United States Patent No. 7,013,925 issued to Saveliev et al., the entire contents of which is herein incorporated by reference. The pressure tank 28 can vary in volume. In one embodiment, the pressure tank 28 does not exceed about two gallons, while in another embodiment, the pressure tank 28 does not exceed about six gallons. The pressure tank 28 can store the permeate water. In some embodiments, the pressure tank 28 can store a mixture of the permeate water and the feed water.

In some embodiments, the accumulator tank includes a valve in fluid communication with an internal cavity of the accumulator tank and, particularly, in fluid communication with a gap of the internal cavity surrounding a flexible bladder when the flexible bladder is positioned with the internal cavity. The flexible bladder can comprise a flexible material, including without limitation, a variety of polymers, such as elastomers. For example, the flexible bladder can comprise a natural rubber or a synthetic rubber (e.g., butyl, or other types of rubber). However, the inventors have discovered that flexible material having few or no pores can provide good performance results. In some embodiments, the flexible material can include latex; urethane; thermoplastic elastomer (TPE) or thermoplastic elastomer blend (e.g., a styrene block copolymer (SBS & SEBS), impact modified and super soft polypropylene, thermoplastic vulcanizate (TPV) (e.g., a polyolefinic blend of polypropylene and crosslinked ethylene-propylene diene monomer (EPDM)), thermoplastic polyurethanes (TPU), Melt Processible Rubber (MPR), thermoplastic copolyesters (TPEE), and thermoplastic polyamides); ethyl vinyl acetate (EVA), ethylene propylene diene monomer (EPDM), ethylene propylene copolymer, polyvinyl chloride (PVC), and any combination thereof. In some embodiments, the flexible bladder comprises a TPE-TPV alloy (e.g., a TPE-NEXPRENE(R) alloy; NEXPRENE(R) available from Solvay Engineered Polymers), which can essentially have no pores and is tasteless. The valve can facilitate the passage of air or other fluid to and from the gap surrounding the flexible bladder. In some embodiments, a source of air or other fluid (not shown) can be coupled to the valve to introduce air or other fluid into the gap in order to increase pressure around the flexible bladder. Increasing pressure between the accumulator tank and the flexible bladder can increase the pressure within the flexible bladder and, therefore, can increase fluid pressure in the fluid supply system coupled to the accumulator tank assembly. The valve can be actuated to release fluid from the gap in order to reduce pressure around the flexible bladder. Decreasing pressure between the accumulator tank and the flexible bladder decreases pressure within the flexible bladder and, therefore, can decrease fluid pressure in the fluid supply system coupled to the accumulator tank assembly. In some embodiments, air pressure surrounding the flexible bladder can be increased by coupling an air source to the air valve and introducing pressurized air into the gap surrounding the flexible bladder.

The reverse osmosis system 10 of FIG. 1-8 can operate as follows. Feed water can enter the reverse osmosis system 10 at the water inlet 30 and flow through the carbon filter 12. The feed water can enter the first manifold 14. The first valve 32 connected to the first manifold 14 can be normally closed and can open when the boost pump 16 is running. The first manifold 14 can be fluidly connected to the boost pump 16. The boost pump 16 can increase the water pressure. From the boost pump 16, the water can flow through the second manifold 18. The second manifold 18 can be equipped with the first TDS sensor 34, which can measure the feed water TDS value, and the bypass port 35. The water can be pushed through the reverse osmosis module 20 by the increased pressure generated by the boost pump 16. An inlet of the reverse osmosis module 20 can be fluidly connected to the second manifold 18, while a permeate outlet of the reverse osmosis module 20 can be fluidly connected to the third manifold 22. Water passing through the reverse osmosis module 20 can flow as permeate water to the third manifold 22. Water not reaching the permeate outlet of the reverse osmosis module 20 can be drained through a brine port 45 and can leave the reverse osmosis system 10 as concentrate.

The third manifold 22 can be equipped with the second valve 36 that can be normally closed and can open during normal operation. The third manifold 22 can also be equipped with a blend port 38. The blend port 38 and the bypass port 35 can be in fluid communication so that a portion of the feed water can bypass the reverse osmosis module 20. The mixture of permeate and feed water leaving the third manifold 22 can be referred to as mixed water. Downstream of the third manifold 22, permeate water or mixed water can flow through the permeate pump 24 before flowing through the fourth manifold 26. The permeate pump 24 can work against an increasing pressure in the pressure tank 28 in order to further support feed water flow through the reverse osmosis module 20. The fourth manifold 26 can be equipped with a second TDS sensor 40, which can measure the TDS level of the permeate water or the mixed water. From the fourth manifold 26, the permeate water or the mixed water can be stored in the pressure tank 28.

In one embodiment, the permeate pump 24 has a shut-off setting of about 90 PSI in order to shut the reverse osmosis system 10 down when the pressure tank 28 is pressurized to about 90 PSI. From the permeate pump 24, the water enters the fourth manifold 26. When the TDS level of the permeate water or mixed water is higher than a maximum setting, the second valve 36 can close while the boost pump 16 is running, forcing all the water to flush through the brine port 45 in order to flush the surface of the reverse osmosis module 20.

From the brine port 45 of the reverse osmosis module 20, the water can pass through a brine water flow control (not shown) and then through a check valve (not shown). The blend port 38 can be equipped with a flow control to regulate the amount of water bypassing the reverse osmosis module 20. A controller 55 can measure the incoming TDS value with the first TDS sensor 34 and the outgoing TDS with the second TDS sensor 40. An ideal mixed water TDS value can be entered into the controller 55 by a technician. The blend port 38 and the brine water flow control can be set during installation to obtain the ideal mixed water and recovery fraction for the local water quality. If the mixed TDS rises above its set point, the reverse osmosis module 20 may be fouling. The first valve 32 can remain open and the second valve 36 can close while the boost pump 16 is running. All the water in the reverse osmosis module 20 can be forced out the brine port 45, flushing the reverse osmosis module 20. In one embodiment, the flush cycle can last for about one minute. If the reverse osmosis system 10 goes into the flush cycle a certain number of times and the permeate TDS is still above its setting, the controller 55 can indicate that an adjustment needs to be made. The technician can make adjustments to the blend port 38 or replace the carbon filter 12 and/or the reverse osmosis module 20.

In one embodiment, the reverse osmosis system 10 only measures the TDS of the mixed water. As a result, the reverse osmosis system 10 can includes the TDS sensor 40.

In some embodiments, a net flow rate through the boost pump 16 can differ significantly from a net flow rate through the permeate pump 24. A volumetric displacement of the boost pump 16 and a volumetric displacement of the permeate pump 24 can be adjusted according to a desired flow rate. For example, the volumetric displacement of the boost pump 16 can be selected to coincide with the net flow rate expected for the feed water stream, and the volumetric displacement of the permeate pump 24 can be selected to coincide with the net flow rate expected for the permeate stream.

The net flow rate through the permeate pump 24 can depend on the feed water characteristics as described above. The net flow rate through the permeate pump 24 can correlate to the membrane recovery of the reverse osmosis module 20. In some embodiments, the volumetric displacement of the boost pump 16 can be substantially equal to the volumetric displacement of the permeate pump 24. In some embodiments, the boost pump 16 and the permeate pump 24 can share a common motor 44, and the motor 44 can drive the boost pump 16 and the permeate pump 24 at substantially equal or different speeds.

The different net flow rates through the boost pump 16 and the permeate pump 24 can compromise the longevity of at least one of the boost pump 16 and the permeate pump 24. Some embodiments can include a bypass, which can recycle at least a portion of the net flow rate through at least one of the boost pump 16 and the permeate pump 24. In one embodiment, the bypass can fluidly connect an outlet of the boost pump 16 and the permeate pump 24 with a respective inlet of the same pump. As a result, a gross flow rate through the boost pump 16 and the permeate pump 24, i.e. the net flow rate plus the recycled portion by the bypass, can be adjusted to the net flow rate of the corresponding other pump. In one embodiment, the gross flow rate through the permeate pump 24 can substantially equal the net flow rate of the boost pump 16, The bypass can be adjusted using gate valves, needle valves, pressure regulators, orifices or other conventional devices. The bypass can be manually operated or by the controller 55.

While the bypass can substantially keep the gross flow rate through the boost pump 16 and the permeate pump 24 equal, the net flow rate of the boost pump 16 and the permeate pump 24 can be substantially different, if a portion of the net flow rate is recycled through the bypass. In one embodiment, the bypass can fluidly connect the pressure tank 28 with the inlet of at least one of the boost pump 16 and the permeate pump 24. As a result, the net flow rate through the boost pump 16 and the permeate pump 24 can be adjusted to fulfill on-demand flow requirements of the reverse osmosis system 10.

The reverse osmosis system 10 of FIGS. 1-8 can offer a reduced foot print. The carbon filter 12 and the reverse osmosis module 20 can be positioned to reduce the overall foot print of the reverse osmosis system 10. For example, the carbon filter 12 and the reverse osmosis module 20 can be positioned inward closer to the pump/motor 16, 24, 44. Alternatively, the carbon filter 12 can be positioned under the reverse osmosis module 20. As another example, the carbon filter 12 and the reverse osmosis module 20 can be coupled together with clips.

The reverse osmosis system 10 of FIGS. 1-8 can use tank clips (not shown) for the pressure tank 28 that can be molded out of strong enough material to avoid breakage during transport. The tank clips can also be molded out of softer material and fastened with a tamper-evident strap.

The reverse osmosis system 10 of FIGS. 1-8 can include a cover (not shown) to protect the connections. The cover can include a shroud that is hinged on one side and pivots to expose the serviceable components. A display can be inlayed into the cover. The electrical cord of the display can be used as a tether to limit movement of the hinged cover. The electrical cord of the display can also be used to guard against accidental discard.

The reverse osmosis system 10 of FIGS. 1-8 can include an easy to use TDS adjustment. In one embodiment, the system 10 can use a key-type valve to introduce a certain amount of feed water into the permeate water to achieve a specific TDS value. A position wheel with a keyed pop-up indicator can be used to adjust the TDS value. The wheel can include numbers or letters to indicate levels of the TDS being introduced. The TDS can be measured in milligram per liter (mg/L) and in parts per million (ppm). A user or technician can adjust the TDS of the water being dispensed to a value commonly used for beverages. In one embodiment, this value can be about 130 mg/L or ppm TDS.

The reverse osmosis module 20 can be flushed to reduce scaling. This can be achieved in a number of ways. The valves 32, 36 can be changed to normally open valves and can attach to the brine port 45. The normally open valves 32, 36 can be closed while producing the permeate water and can open to purge when the boost pump 16 and the permeate pump 24 are off. This can result in flushing the reverse osmosis module 20 every cycle of the reverse osmosis system 10. A pressure relief valve can be added to the brine port 45 to purge concentrate when the second valve 36 is closed. The water flow can also be limited during a production cycle that is held constant as the pressure tank 28 is filled to pressure.

The plumbing connections of the reverse osmosis system 10 of FIGS. 1-8 can be positioned in any one of the following positions: the inlet on the left and the outlet on the right; the inlet and the outlet on the same side of the system 10; the inlet at 90 degrees from the outlet; or the inlet and the outlet under the cover and accessible only by a technician.

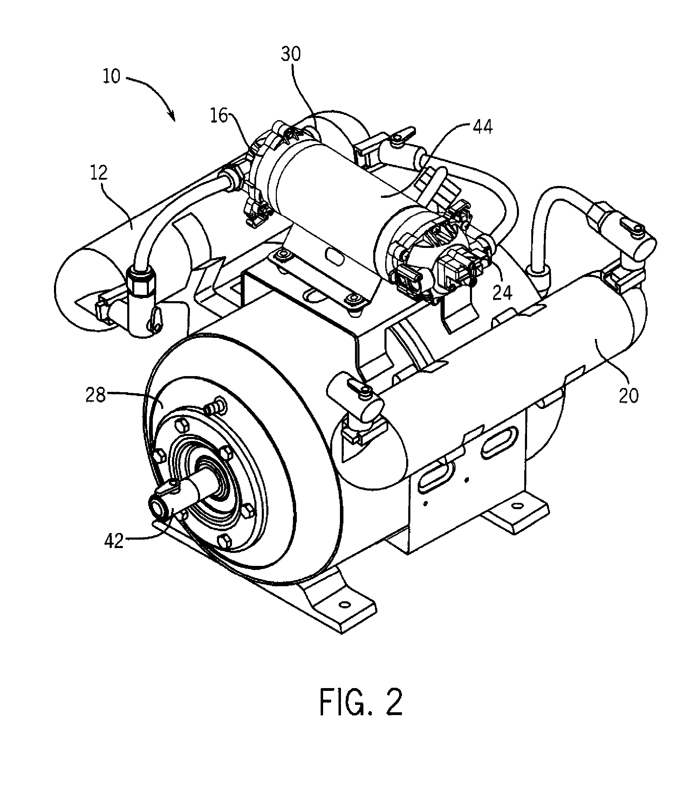

In some embodiments, the required inlet water pressure for the reverse osmosis system 10 of FIGS. 1-8 can be about 50 PSI. If the inlet water pressure cannot be achieved at an installation site, the plumbing connections of the reverse osmosis system 10 can be routed as shown in FIG. 2. The water inlet 30 can be positioned at the inlet of the boost pump 16. The boost pump 16 can increase the water pressure of the water inlet 30 before the water coming from the water inlet 30 passes through the carbon filter 12. Downstream of the carbon filter 12, the water can be propelled by the permeate pump 24 before entering the reverse osmosis module 20. The permeate pump 24 can boost the pressure of the water to increase the permeate water production. In one embodiment, the permeate pump 24 can act as a cross-flow pump increasing the velocity through which the water can pass the reverse osmosis module 20. Some embodiments can include a third pump acting on the permeate water to increase permeate production by lowering the pressure at the permeate side of the reverse osmosis module 20. The third pump can be controlled along with the boost pump 16 and the permeate pump 24. The permeate water downstream of the reverse osmosis module 20 can be stored in the pressure tank 28 and the concentrate can be drained through the brine port 45 of the reverse osmosis module 20.

The reverse osmosis system 10 of FIGS. 1-8 can include a direct bypass that can be operated by workers being directed by a technician over the phone. The following options can be used: a large "red-handled" valve visible in front of the system 10 connecting the inlet to the outlet; a large "red-handled" valve visible in front of the system 10 connecting the carbon filter 12 directly to the outlet circuit; or a large "red-handled" valve visible in front of the system 10 connecting the outlet of the pressure tank 28 with the water inlet 30.

In some embodiments, the demands of all the beverage equipment the reverse osmosis system 10 will serve can be averaged together. The reverse osmosis system 10 can serve various types of beverage equipment, such as coffee equipment, fountain equipment, and steamer equipment. Table 1 summarizes performance characteristics of the reverse osmosis system 10 according to one embodiment of the invention.

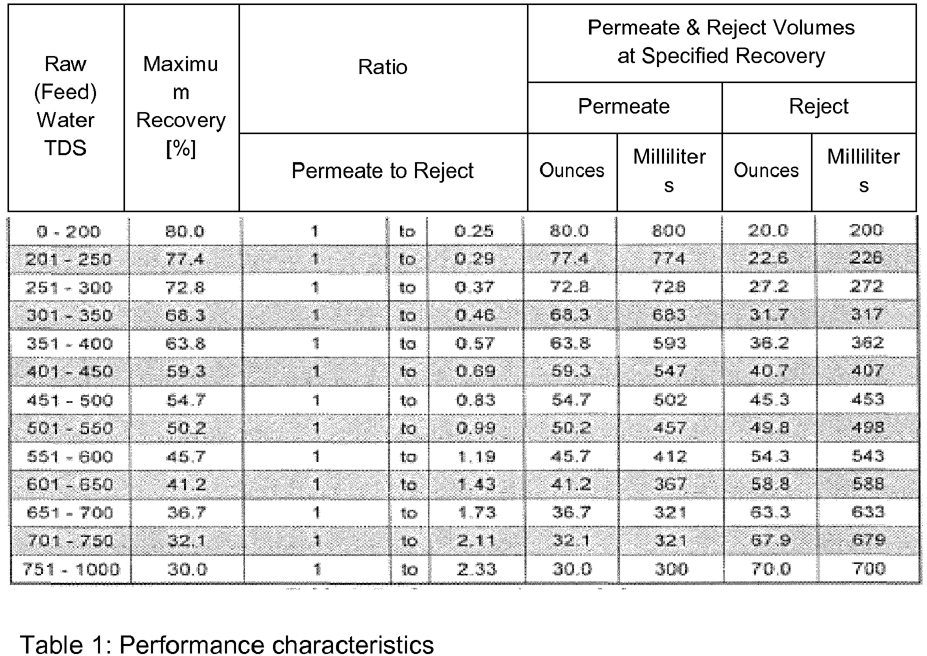

The reverse osmosis system 10 can include safety devices, such as a pressure switch to guard the reverse osmosis module 20 and plumbing connections from rupture and a temperature probe to guard against high and low temperatures. The temperature limitations of the TDS meter can also be selected and published in a user manual.

The reverse osmosis system 10 of FIGS. 1-8 can offer a compact, efficient system. The reverse osmosis system 10 can be light enough to be installed by a single person. The installation time for the reverse osmosis system 10 can be reduced by minimal on-site assembly requirements. One embodiment can be installed in about one hour by a single technician. The reverse osmosis system 10 can include disposable and recyclable filter cartridges. The integrated pumps 16, 24 can improve efficiency and reduce waste. The reverse osmosis system 10 can include an integrated display and cover. The reverse osmosis system 10 can offer increased sustainability and green effects through low-water waste, low-energy use, recyclable filter cartridges, and modular/rebuildable components.

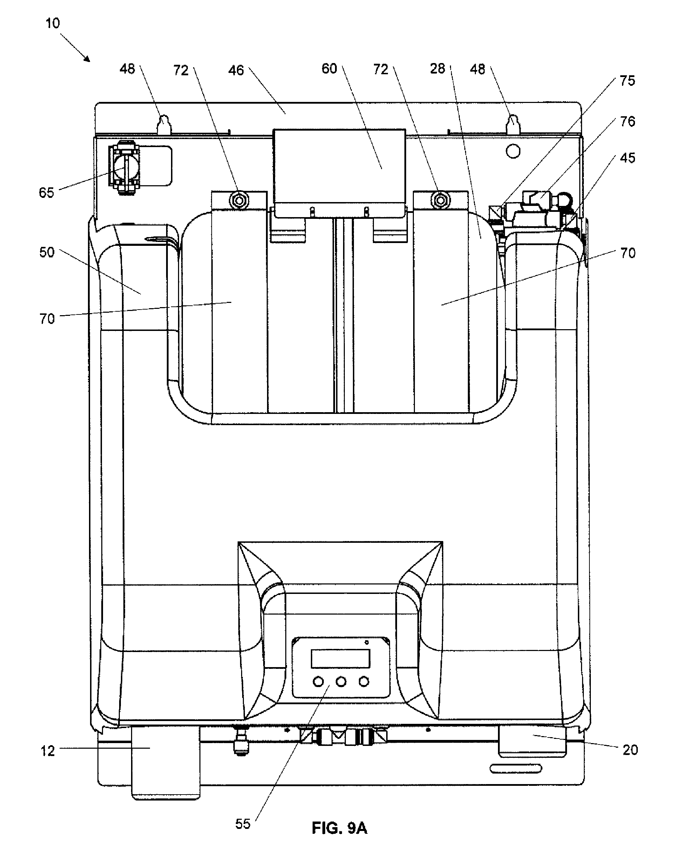

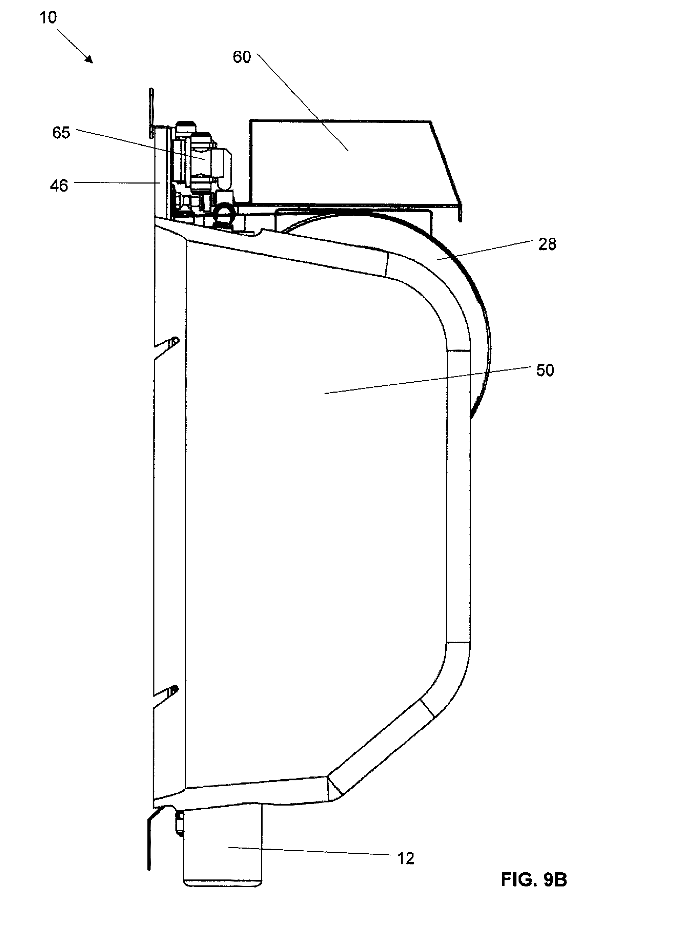

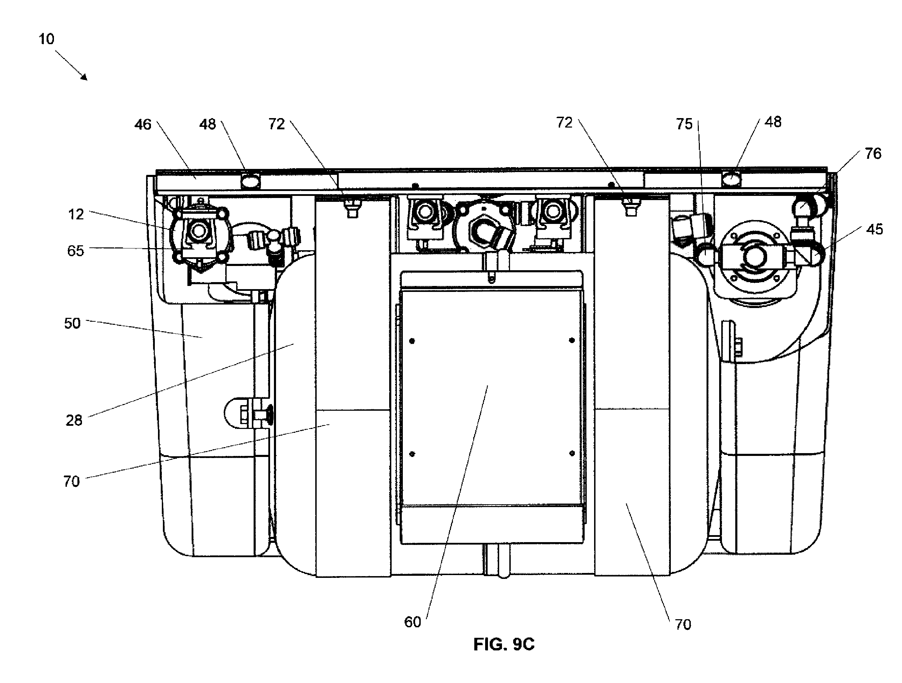

FIGS. 9A-9C illustrate another embodiment of the reverse osmosis system 10. As shown in FIGS. 9A-9C, the reverse osmosis system 10 can be mounted on a large bracket 46. The bracket 46 can include apertures 48 used to attach the bracket 46 to building walls. The reverse osmosis system 10 can include a cover 50, a display 55, a power supply 60, and a first manual shut-off valve 65. The pressure tank 28 can be mounted to the bracket 46 with straps 70 and fasteners 72. The reverse osmosis module 20 can include a feed water inlet 75, a permeate outlet 76, and the brine port 45, through which the concentrate can be drained.

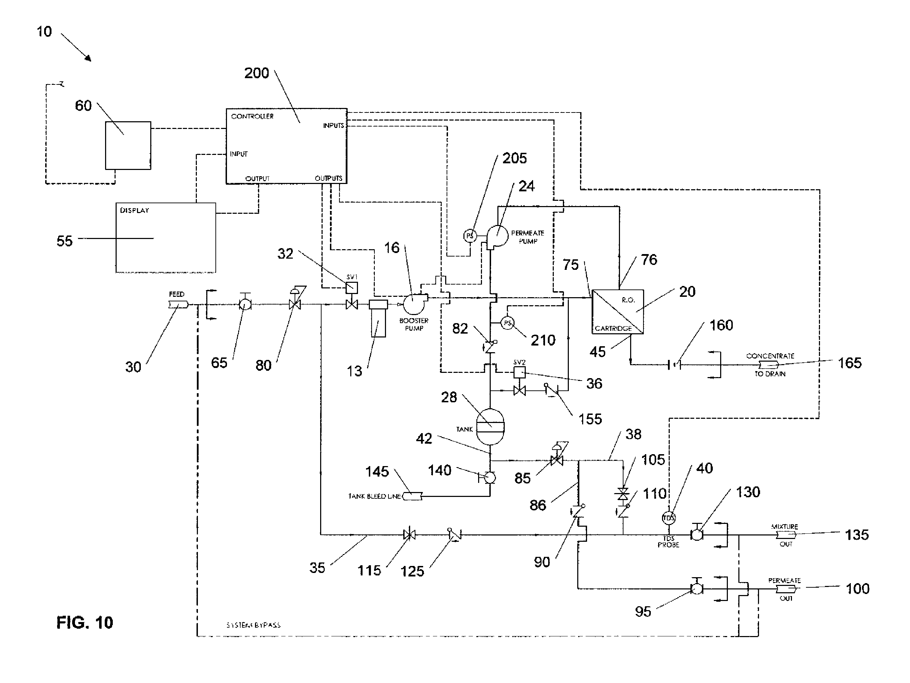

FIG. 10 illustrates a flow schematic for the reverse osmosis system 10 according to one embodiment of the invention. As shown in FIG. 10, the reverse osmosis system 10 can include a pre-treatment cartridge 13, the boost pump 16, the reverse osmosis module 20, the permeate pump 24, the pressure tank 28, the feed inlet 30, the first valve 32, the bypass port 35, the second valve 36, the blend port 38, the second TDS sensor 40, the display 55, the power supply 60, and the first manual shut-off valve 65. The feed water entering the reverse osmosis system 10 at the feed inlet 30 can be filtered by another filtration system (not shown), which can include a particulate filter and/or a carbon filter to remove dissolved substances.

FIG. 10 further illustrates a first pressure regulator 80, a first check valve 82, a second pressure regulator 85, a permeate line 86, a second check valve 90, a second manual shut-off valve 95, and a permeate water outlet 100. In addition, the reverse osmosis system 10 can include a Dilution Blend Valve (DBV) 105, a third check valve 110, a Feedwater Blend Valve (FBV) 115, a fourth check valve 125, a third manual shut-off valve 130, a mixture outlet 135, a fourth manual shut-off valve 140, a tank bleed line 145, a fifth check valve 155, a flow control 160, and a concentrate outlet 165.

The reverse osmosis system 10 can still further include a controller 200, a first pressure switch 205, and a second pressure switch 210. The display 55 can connect to the controller 200 and can communicate user input to the controller 200. The controller 200 can operate the boost pump 16, the permeate pump 24, the first valve 32, the second valve 36, and the motor 44 based on signals from the TDS sensor 40, the display 55 (user input), the first pressure switch 205, and the second pressure switch 210. The controller 200 can include control routines to minimize user intervention.

From the feed inlet 30, incoming feed water can flow through the first manual shut-off valve 65 and the pressure regulator 80. If the reverse osmosis system 10 becomes inoperative, the manual shut-off valve 65 can be closed and the feed water can be directed to at least one of the permeate water outlet 100 and the mixture outlet 135. In one embodiment, the pressure regulator 80 can level the incoming feed water pressure to about 50 PSI to prolong the life span of the pre-treatment cartridge 13 and other components of the reverse osmosis system 10, and to ensure consistent blending of the feed water and the permeate water. The minimum incoming feed water pressure can be about 50 PSI, which may become necessary to achieve if the incoming feed water is pre-treated before entering the reverse osmosis system 10. From the pressure regulator 80, the feed water can flow through the first valve 32, the pre-treatment cartridge 13, and the boost pump 16 before entering the reverse osmosis module 20. The first valve 32 can be operated by the controller 200 depending on a detected flow demand of the permeate water. The detected flow demand can correspond to a signal from the second pressure switch 210.

The feed water entering the reverse osmosis module 20 through the feed water inlet 75 can reach the permeate outlet 76 or can exit the reverse osmosis module 20 through the brine port 45. The boost pump 16 can increase the feed water pressure to propel water through the reverse osmosis module 20 in order to increase the ratio of permeate water to concentrate. The flow control 160 can be positioned upstream of the concentrate outlet 165 and can restrict the flow rate through the brine port 45 to further support the production of permeate water. The flow of the concentrate leaving the reverse osmosis system 10 through the brine port 45 can be substantially laminar, in some embodiments. The concentrate outlet 165 can include one or more drain lines. The flow rate through the drain lines can be adjusted to achieve a system recovery fraction that depends on a local water quality.

The permeate water leaving the reverse osmosis module 20 through the permeate outlet 76 can enter the permeate pump 24. The controller 200 can operate the permeate pump 24 based on signals from the first pressure sensor 205, which can measure the pressure of the permeate water leaving the permeate pump 24. The permeate pump 24 can increase the production of the permeate water by lowering a pressure on its upstream side in order to increase the flow rate through the reverse osmosis module 20. The permeate pump 24 can also increase the pressure on its downstream side to facilitate filling of the pressure tank 28.

The second pressure switch 210 can measure the pressure of the permeate water downstream of the permeate pump 24. The signals from the second pressure switch 210 can be used as an indication of the fill level of the pressure tank 28. The permeate water pumped into the pressure tank 28 by the permeate pump 24 can exit through the outlet 42 of the pressure tank 28. From the outlet 42, the permeate water can flow through the second pressure regulator 85 before splitting into two streams. A first stream can flow through the permeate line 86 and can exit the reverse osmosis system 10 through the permeate water outlet 100. The permeate line 86 can include the second check valve 90 and the second manual shut-off valve 95.

A second stream of the permeate water can flow through the blend port 38, which can be fluidly connected to the bypass port 35. In some embodiments, the blend port 38 can include the DBV 105 and the third check valve 110. In some embodiments, the bypass port 35 can include the FBV 115 and the fourth check valve 125. The DBV 105 and the FBV 115 can be adjusted to control the TDS value of the mixture of the feed water and the permeate water. The TDS value of the mixed water can be measured by the TDS sensor 40 upstream of the mixture outlet 135. The third manual shut-off valve 130 can be positioned between the TDS sensor 40 and the mixture outlet 135. The DBV 105 can draw permeate water from the pressure tank 28 to create the mixture of the permeate water and the feed water. The pressure tank 28 can receive the permeate water while delivering the permeate water to the DBV 105. Using the permeate water stored in the pressure tank 28 can increase the flow rate of the mixed water and/or can prolong the time a certain flow rate of the mixed water can be achieved by the reverse osmosis system 10. Even if a requested flow rate of the mixed water can be fulfilled on-demand by the reverse osmosis system 10, the permeate water can be supplied from the pressure tank 28.

If the TDS sensor 40 detects an elevated TDS value, the controller can initiate a flush cycle. During the flush cycle, no permeate water will be produced. The first valve 32 can be closed by the controller 200, while the second valve 36 can be opened. The first check valve 82 can prevent flow back into the permeate pump 24. By opening the second valve 36, the permeate water stored in the pressure tank 28 can flow through the fifth check valve 155 to the feed water inlet 75 of the reverse osmosis module 20 with a high velocity in order to flush away accumulated deposits in the reverse osmosis module 20 and dissolved solids in the water adjacent to the membrane. The flush water together with the solids can exit through the brine port 45. The controller 200 can also initiate the flush cycle based on a regular interval. This regular interval and the duration of the flush cycle can be programmed in the controller 200 by a user or a technician. Table 2 summarizes the duration of the flush cycle proportional to the flow rate through the brine port 45 according to one embodiment of the invention.

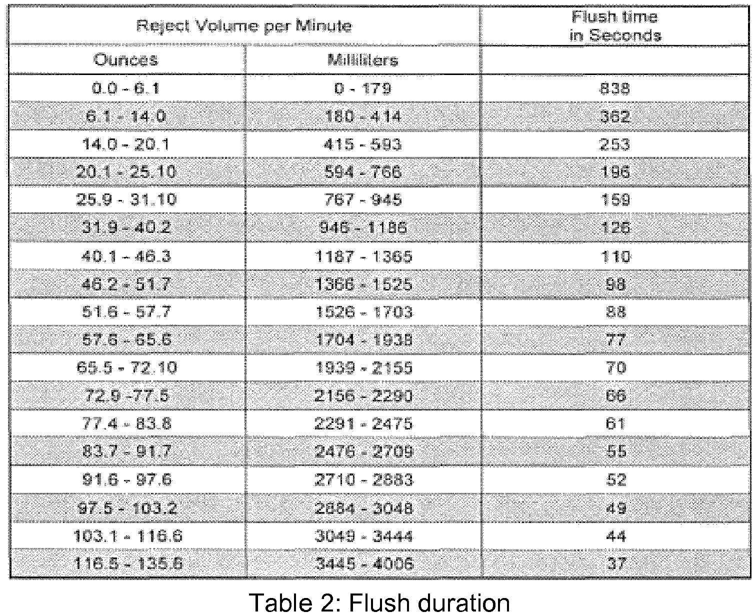

The pre-treatment cartridge 13 can act as a scale inhibitor by removing dissolved and/or non-dissolved solids. The pre-treatment cartridge 13 can include an anti-scalant component. In one embodiment, the pre-treatment cartridge 13 can only include an anti-scalant while in other embodiments, the pre-treatment cartridge 13 can include the anti-scalant and/or carbon and/or particle filtration. The reverse osmosis module 20 can include a pre-treatment media. The pre-treatment media can act as a scale inhibitor. In one embodiment, the pre-treatment media can be positioned adjacent to the feed water inlet 75 and be separated from the brine port 45 by a brine seal. For example, the pre-treatment media can be positioned in a cap of the reverse osmosis module 20. The brine seal can prevent the feed water coming through the feed water inlet 75 from reaching the permeate outlet 76 without flowing through the reverse osmosis module 20. The scale pre-treatment media can reduce scaling on the reverse osmosis module 20 and can include hexametaphosphate, in some embodiments. In some embodiments, the pre-treatment media can include nanotechnology material, polyacrylic acids or other anti-scalants.

The reverse osmosis module 20 can include an ultra-slick surface to prevent scale build up. Other measures to prevent scaling on the reverse osmosis module 20 can include placing dimples and/or pleats on the reverse osmosis module 20. The pleats can be aligned with a direction of flow inside the reverse osmosis module 20. In some embodiments, the reverse osmosis module 20 can include sonicators, which can prevent or reduce scaling using ultrasonic waves. In some embodiments, the reverse osmosis module 20 can include nanotechnology material.

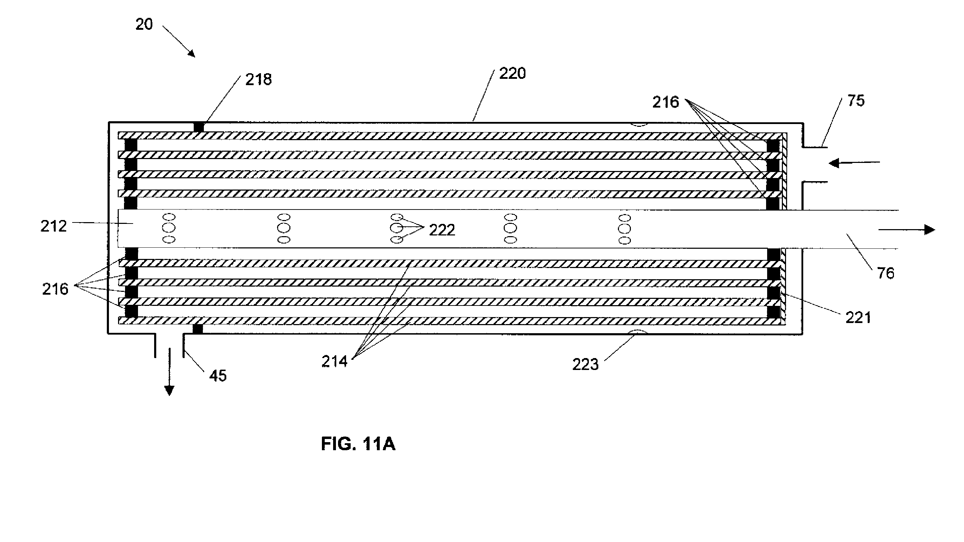

FIG. 11A illustrates a cross-sectional view of the reverse osmosis module 20. The reverse osmosis module 20 can include the feed water inlet 75, the permeate outlet 76, and the brine port 45. The reverse osmosis module can further include a permeate tube 212, a reverse osmosis membrane 214, a plurality of spacers 216, a brine seal 218, a housing 220, an end cap 221, apertures 222, and a flow control device 223. In one embodiment, the reverse osmosis membrane 214 can be wrapped around the permeate tube 212. The permeate tube 212 can have a plurality of apertures 222 distributed along its length and circumference. The reverse osmosis membrane 214 can form a plurality of layers, which can be separated by the spacers 216. The end cap 221 can prevent the feed water flowing into the reverse osmosis module 20 from entering the permeate tube 212 prematurely. The brine seal 218 can create a seal between an outer layer of the reverse osmosis membrane 214 and the housing 220. The permeate tube 212 can be closed on one end so that the feed water/concentrate, which cannot reach the apertures 222 of the permeate tube 212, can exit through the brine port 45. The brine seal 218 can prevent a mixing of the feed water with the concentrate. The feed/permeate water entering the permeate tube 212 through the aperture 222 can exit through the permeate outlet 76. The flow control device 223 can introduce a degree of turbulence into the stream of feed water. The generated turbulence can enhance the permeate water production. The reverse osmosis membrane 214 can create laminar flow from the feed water stream.

Near the feed water inlet 75, the flow rate of the feed water passing through the reverse osmosis membrane 214 can be less than farther away from the feed water inlet 75. As a result, the velocity of the water through the reverse osmosis membrane 214 can be smaller close to the feed water inlet 75 and can increase in the downstream direction. This velocity gradient can be related to the production of permeate water over the length of the reverse osmosis membrane 214. A slow flow velocity through the reverse osmosis membrane 214 can increase scaling. To help prevent or reduce scaling near the feed water inlet 75, the reverse osmosis membrane 214 can enable a higher flow rate to the permeate outlet 76. In one embodiment, the flow rate toward the permeate outlet 76 can be substantially constant over the length of the reverse osmosis module 20.

In one embodiment, a cross section of the feed water inlet 75 can be selected to increase the velocity of the feed water entering the reverse osmosis module 20. As a result, the flow rate to the permeate outlet 76 can increase near the feed water inlet 75. In one embodiment, the cross-sectional area of the feed water inlet 75, the permeate outlet 76, and the brine port 45 can be substantially equal, ïn another embodiment, the cross-sectional area of the feed water inlet 75, the permeate outlet 76, and the brine port 45 can be substantially different from each other. The brine port 45 can have the smallest cross-sectional area, the feed water inlet 75 can have a medium cross-sectional area, and the permeate outlet 76 can have the largest cross-sectional area.

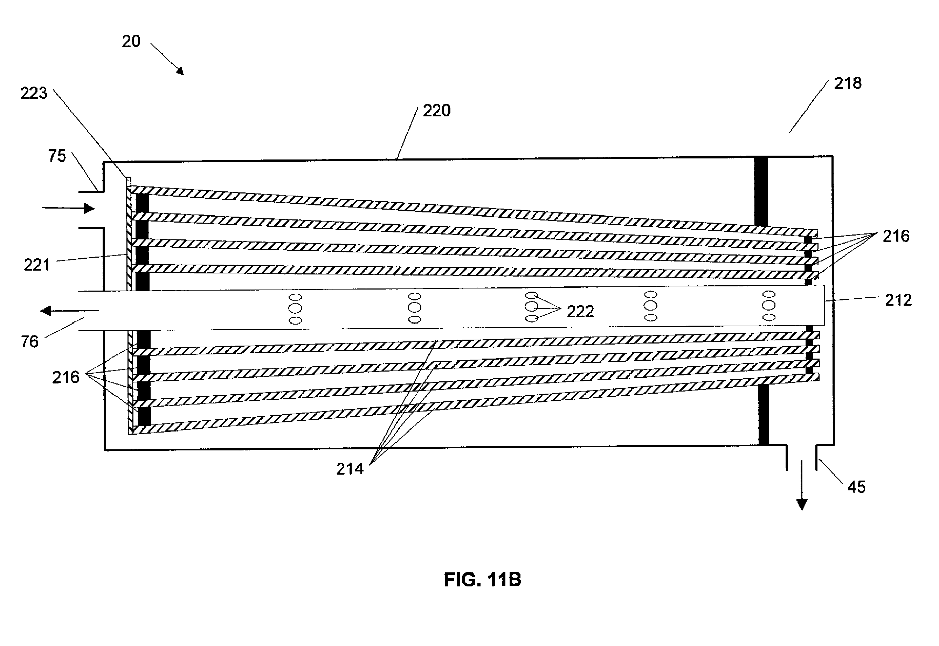

FIG. 11B illustrates another embodiment of the reverse osmosis module 20. The spacers 216 can be configured to promote the production of permeate water. The spacers 216 can be larger near the feed water inlet 75 than near the closed end of the permeate tube 212. As a result, the velocity of the feed/permeate water flowing through the reverse osmosis membrane 214 can be increased near the feed water inlet 75. With the feed water flowing toward the permeate tube 76, a volumetric flow rate of the feed water can decrease in the longitudinal direction. The spacers 216 can be configured to compensate the decreasing volumetric flow rate of the feed water. In one embodiment, the spacers 216 can include a mesh. The mesh can be wrapped around the permeate tube 212 together with the reverse osmosis membrane 214. The decrease in volumetric flow rate near the feed water inlet 75 can be realized by different mesh sizes. The mesh can be thick near the feed water inlet 75 and can be substantially thinner away from the feed water inlet 75. In one embodiment, the mesh can be coarse close to the feed water inlet 75 and can be substantially finer away from the feed water inlet 75. As a result, the flow through the reverse osmosis membrane 214 can be decelerated in a direction away from the feed water inlet 75. The flow control device 223 can be positioned on the end cap 221 and can generate turbulence to enhance penetration of the feed water into the reverse osmosis membrane 214.

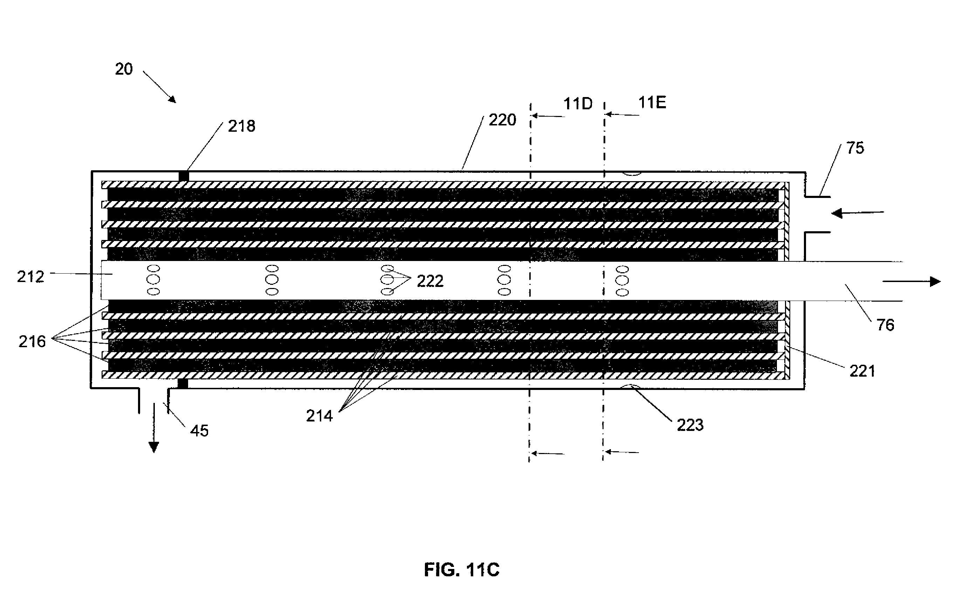

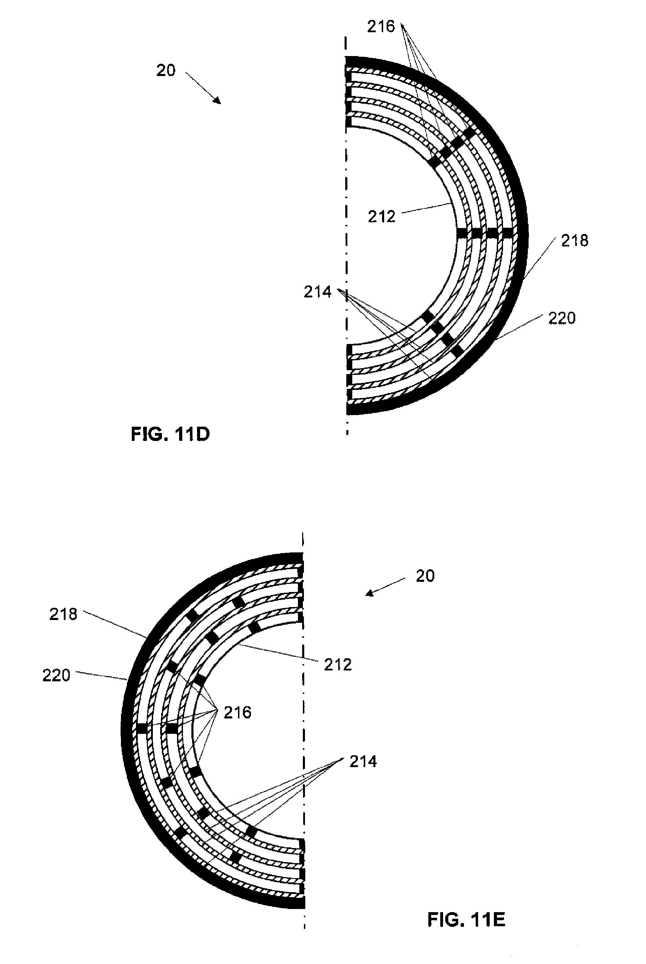

FIG. 11C illustrates another embodiment of the reverse osmosis module 20. The spacers 216 can be substantially longitudinally aligned with the permeate tube 212. The spacers 216 may not be parallel to the permeate tube 212 and can vary in height, as described with respect to FIG. 11B. The spacers 216 can be substantially aligned with a direction of flow inside the reverse osmosis module 20. As shown in FIGS. 11D and 11E, the spacers 216 can create channels between different layers of the reverse osmosis membrane 214. As shown in FIG. 11D, the spacers 216 can align in a substantially radial direction. FIG. 11E illustrates a scattering of the spacers 216 between the layers of the reverse osmosis membrane 214. The spacers 216 can include a mesh, which can include a variable thickness to create the channels.

In some embodiments, the reverse osmosis membrane 214 can be constructed using extruded netting manufactured by DelStar Technologies, Inc. and sold under the brand Naltex®.

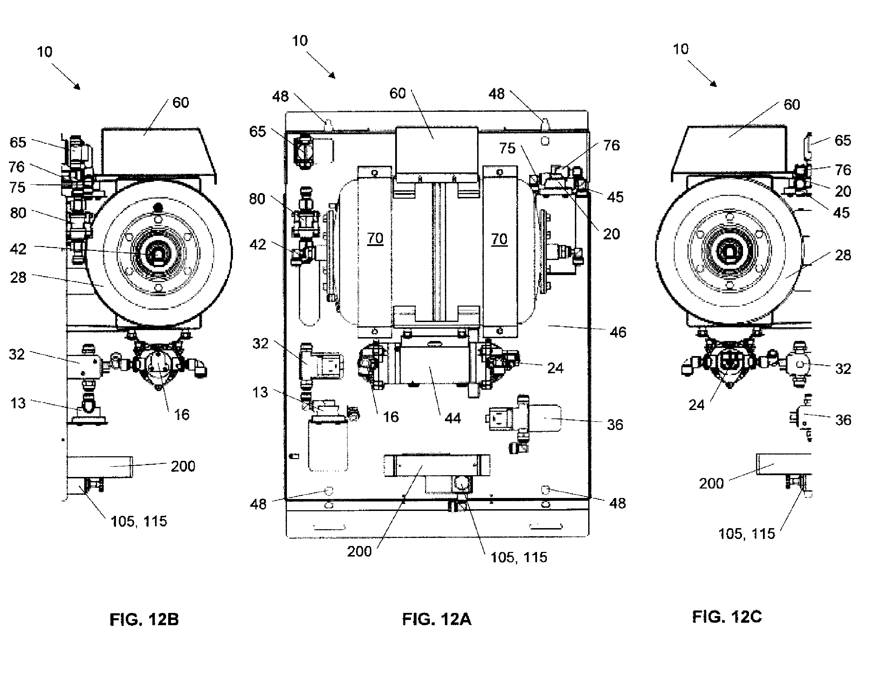

FIGS. 12A-12C illustrate an arrangement of the components of the reverse osmosis system 10 according to one embodiment of the invention. In some embodiments, all of the components can be coupled to the bracket 46, either directly or with additional brackets and fasteners. The components can be arranged so that the cover 50 (not shown) can protect the components and their connections from accidental damage and removal. In some embodiments, the pre-treatment cartridge 13 and the reverse osmosis module 20 can be substantially vertically mounted, the permeate pump 24 can be positioned near the pressure tank 28 and the boost pump 16 can be positioned near the reverse osmosis module 20. As a result, pressure losses in the connections between the boost pump 16 and the reverse osmosis module 20 and between the permeate pump 24 and the pressure tank 28 can be minimized. The power supply 60 can be positioned at a "dry" location (i.e., a location that is unlikely to get wet if a connection fails or a line bursts).

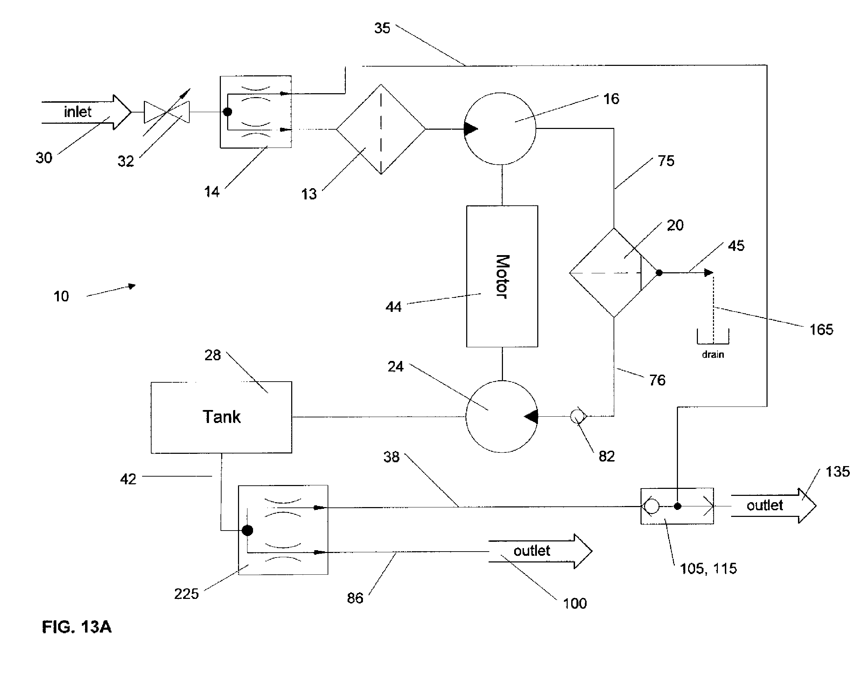

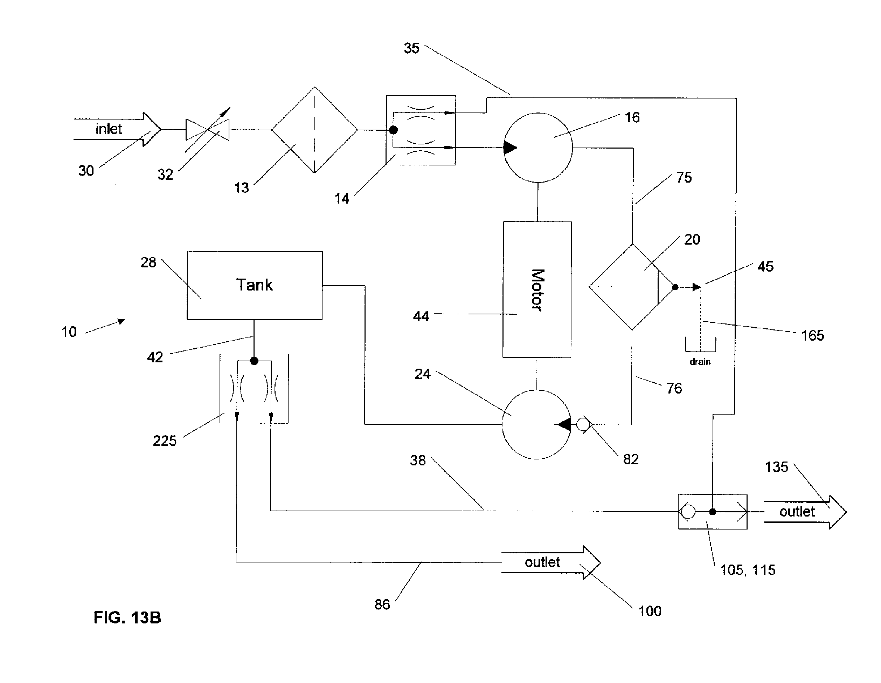

FIG. 13A schematically illustrates a flow path of the reverse osmosis system 10 according to another embodiment of the invention. The feed water entering the reverse osmosis system 10 through the water inlet 30 can flow through the first valve 32 before the first manifold 14 divides the flow into a stream passing the pre-treatment cartridge 13 and a stream entering the bypass port 35. The boost pump 16 can increase the pressure of the feed water leaving the pre-treatment cartridge 13. Downstream of the boost pump 16, the feed water can enter the reverse osmosis module 20, from which the concentrate can be drained through the brine port 45. The reverse osmosis module 20 can contain an anti-scalant integral with the module adjacent to the feed water inlet 75. The permeate water leaving the reverse osmosis module 20 can flow through the first check valve 82 and the permeate pump 24. The boost pump 16 and the permeate pump 24 can be driven by a common motor 44 having two output shafts. The common motor 44 can be a low-current electrical motor. In some embodiments, the common motor 44 can be a brushless DC motor. The permeate pump 24 can propel the permeate water into the pressure tank 28. The permeate water exiting the pressure tank 28 can flow through a fifth manifold 225, which can connect the permeate water outlet 100 and the mixture outlet 135 to the pressure tank 28. The fifth manifold 225 can be a simple T-connector. The blend port 38 can connect the mixture outlet 135 and the fifth manifold 225. The DBV 105 and the FBV 115 can be combined in a single blend valve, which can be positioned along the blend port 38. The blend valve 105, 115 can connect the bypass port 35 and the blend port 38. The blend valve 105, 115 can be adjusted to restrict the amount of feed water coming from the bypass port 35 and entering the blend port 38. As shown in FIG. 13B, the feed water can alternatively enter the bypass port 35 downstream of the pre-treatment cartridge 13, so that the blend valve 105, 115 can mix pre-treated feed water with the permeate water from the blend port 38.

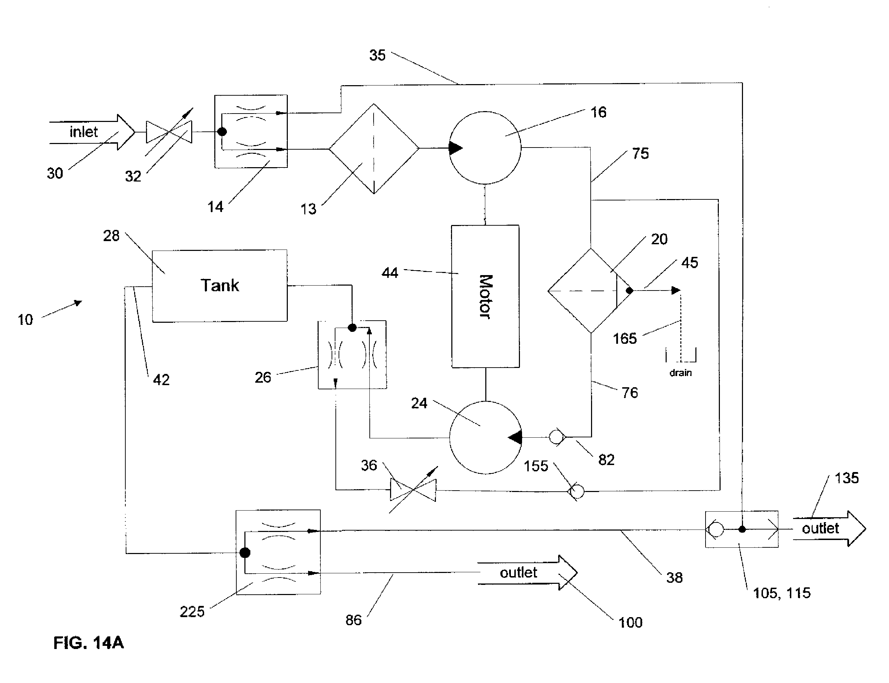

FIG. 14A illustrates a flow path of the reverse osmosis system 10 according to another embodiment of the invention. The feed water entering the reverse osmosis system 10 through the raw water inlet 30 can pass the first valve 32 and the first manifold 14, which can allow a portion of the feed water to enter the bypass port 35 and can direct the remainder of the feed water toward the pre-treatment cartridge 13. From the pre-treatment cartridge 13, the feed water can be pumped into the reverse osmosis module 20 by the boost pump 16. The reverse osmosis module 20 can contain an anti-scalant integral with the module adjacent to the feed water inlet 75. The concentrate can exit the reverse osmosis system 10 through the brine port 45 and the concentrate outlet 165. The permeate water leaving the reverse osmosis module 20 through the permeate outlet 76 can flow through the third manifold 22, the first check valve 82, the permeate pump 24, and the fourth manifold 26, before being stored in the pressure tank 28. From the pressure tank 28, the stream of the permeate water can be divided by the fifth manifold 225 and can exit through at least one of the permeate water outlet 100 and the mixture outlet 135. Upstream of the mixture outlet 135, the permeate water can be mixed with the feed water coming from the bypass port 35 by the blend valve 105, 115. If the reverse osmosis system 10 is idle, the controller 200 can close the first valve 32 preventing the feed water from entering the reverse osmosis system 10.

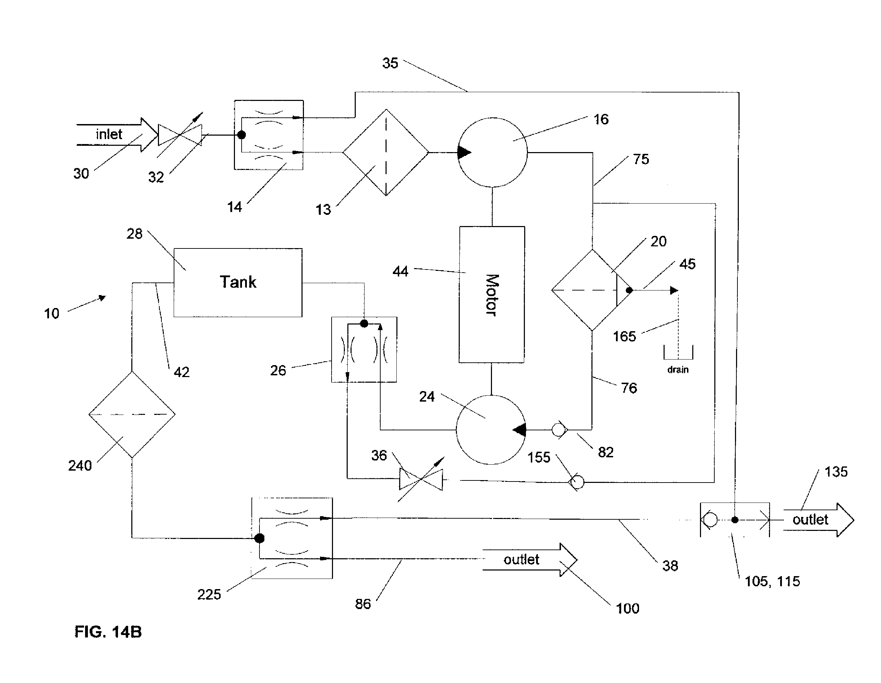

After a prolonged period of the reverse osmosis system 10 being idle, the controller 200 can open the second valve 36. In one embodiment, the prolonged period can be less than a scaling induction time of about three hours, and in another embodiment, about one to two hours. The scaling induction time can depend on the TDS level of the feed water. In some embodiments, the scaling induction time can also depend on the scale inhibitor used upstream of the reverse osmosis module 20. With an open second valve 36, the permeate water can flow back through the fourth manifold 26 and the fifth check valve 155 before entering the reverse osmosis module 20 through the feed water inlet 75, as shown in FIGS. 14A and 14B. In other embodiments, the permeate water can by flow through the third manifold 22 and can enter the reverse osmosis module 20 through the permeate outlet 76.

The incoming permeate water can force the feed water inside the reverse osmosis module 20 to exit through the brine port 45. The controller 200 can close the second valve 36 when substantially the entire reverse osmosis module 20 is filled with permeate water. Flushing the reverse osmosis module 20 with the permeate water can help prevent or reduce scaling on the reverse osmosis module 20 in order to enhance production of permeate water and increase the life span of the reverse osmosis module 20.

The flow path as shown in FIG. 14B can be similar to the flow path of FIG. 14A. However, FIG. 14B illustrates the addition of a second carbon filter 240. In one embodiment, the second carbon filter 240 can be substantially equal to the carbon filter 12. The second carbon filter 240 can be positioned downstream of the outlet 42 of the pressure tank 28. The second carbon filter 240 can be upstream of the fifth manifold 225, as shown in FIG. 14B, or in another embodiment, can be positioned adjacent to the blend port 38. The permeate water, which is stored in the pressure tank 28, may take on an unpleasant taste from a rubber bladder inside the pressure tank 28. The second carbon filter 240 can help eliminate or reduce the unpleasant taste of this permeate water.

If the stored permeate water must be discarded, the pressure tank 28 can be drained by opening the fourth manual shut-off valve 140. The permeate water stored in the pressure tank 28 can then exit through the tank bleed line 145. Draining the pressure tank 28 may be necessary to disinfect the components of the reverse osmosis system 10. A disinfectant can be flushed from the reverse osmosis system 10 before the production of the permeate water is started again.

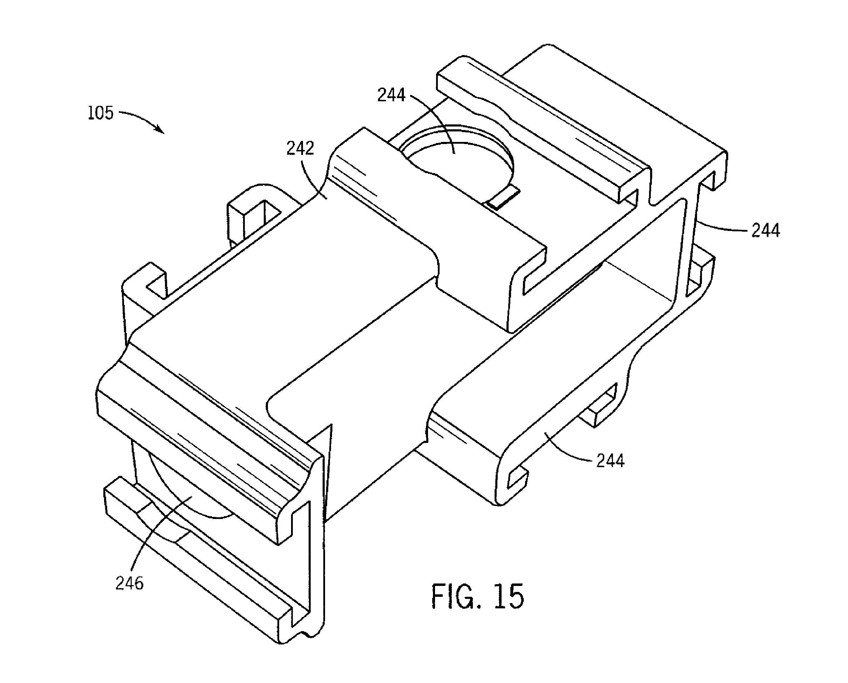

FIG. 15 illustrates a body 242 of the DBV 105. The body 242 can include at least one inlet 244 and an outlet 246. The body 242 can include a plurality of inlets 244 positioned on different sides of the body 242. The different locations of the inlets 244 can allow options for connecting to the DBV 105. For example, the plurality of inlets 244 can be positioned with respect to the outlet 246 to create a 90 degree right turn, a 90 degree left turn, and a straight connection. The body 242 can be modular so that it can also be used for the manifolds 14, 18, 22, and 26 and/or the FBV 115.

FIG. 16A illustrates the DBV 105 according to one embodiment of the invention. The DBV 105 can include the body 242. The DBV 105 can further include a solenoid 248, and a variator stud 250 having grooves 252. The grooves 252 can be part of a quick connect system for easy installation of pipes and/or tubes. FIG. 16A also shows that the inlet 244, which is not in use for the current configuration of the reverse osmosis system 10, can be closed off by a plug 253. The solenoid 248 and the variator stud 250 can be connected to the body 242. As shown in FIG. 16B, the variator stud 250 can be coupled to the outlet 246 of the body 242 so that the water entering through the inlet 244 can flow through the variator stud 250 before exiting the DBV 105. The solenoid 248 can rotate the variator stud 250. The solenoid 248 can enable the DBV 105 to be controlled by the controller 200.

FIG. 17 illustrates another embodiment of the DBV 105. The DBV 105 can include the variator stud 250, a receiver 254, a mark 256, and a nut 258. The variator stud 250 can be coupled to the receiver 254 by the nut 258. The nut 258 can be rotatably coupled to the receiver 254. The nut 258 can engage with the variator stud 250 so that turning of the nut 258 can result in a rotational movement of the variator stud 250 with respect to the receiver 254. The mark 256 can help determining the position of the variator stud 250 with respect to the receiver 254.

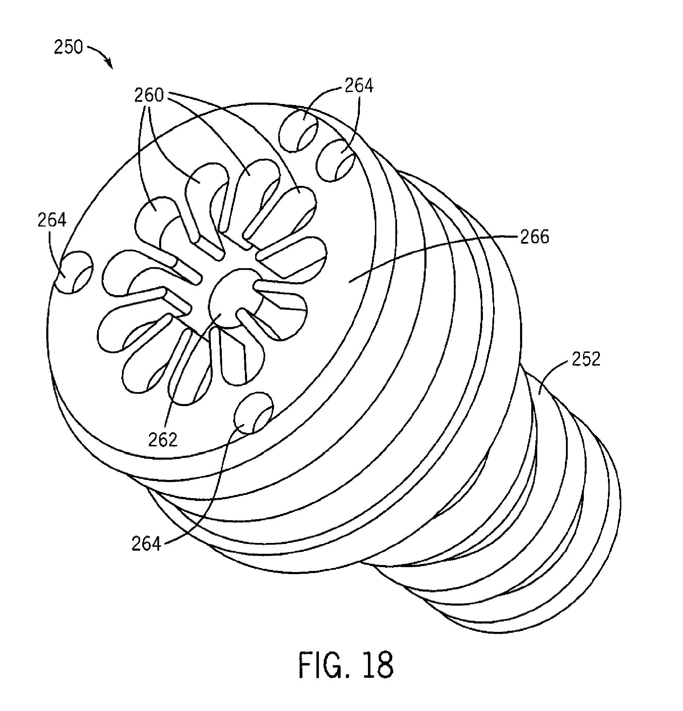

FIG. 18 illustrates the variator stud 250 according to one embodiment of the invention. The variator stud 250 can include the grooves 252, a plurality of slots 260, a through hole 262, and a plurality of notches 264. The plurality of slots 264 can be positioned around the through hole 262 on a first end 266 of the variator stud 250 so that at least one of the plurality of the slots 260 can be in fluid communication with the through hole 262. The plurality of notches 264 can be positioned on the first end 266.

FIG. 19A illustrates a variator disc 268 for use with the variator stud 250. The variator disc 268 can include a plurality of apertures 270 and a plurality of pins 272. The apertures 270 can be located along a circle around the center of the variator disc 268. The size of the apertures 270 can vary with respect to one another. The apertures 270 can include a smallest aperture 274 and a largest aperture 276. In a substantially circumferential direction, the size of the apertures 270 can increase starting from the smallest aperture 274 and ending at the largest aperture 276. The variator disc 268 can include a plurality of same-sized apertures 270. As a result, one aperture 270 can be redundant to another aperture 270 having the same size. If an aperture 270 is clogged, the corresponding redundant aperture 270 can be selected. FIG. 1913 illustrates the bottom of the variator disc 268. The pins 272 can be positioned on the variator disc 268 in a such a way that every pin 272 can compliment the notches 264 of the variator stud 250. The notches 264 and the pins 272 can be arranged so that the variator disc 268 can fit on the first end 266 of the variator stud 250 in only one position.

FIG. 20 illustrates a cross-sectional view of the DBV 105 according to one embodiment of the invention. The variator disc 268 can be attached to the first end 266 of the variator stud 250 and both can be inserted in the receiver 254. The receiver 254 can include a wall 278 having a hole 280. The hole 280 can align with the apertures 270 and the slots 260 in such a way that the hole 280 can be in fluid communication with the through hole 262. The nut 258 can align the variator stud 250 in a specific position and can couple the variator stud 250 to the receiver 254. The connection between the receiver 254 and the variator stud 250 can be fluidly scaled. The nut 258 can be rotated with respect to the receiver 254 so that different apertures 270 can be aligned with the hole 280. A certain position of the variator stud 250 can be related to a specific aperture 270, which, in turn, can relate to a specific flow rate through the DBV 105. This design for the DBV 105 can also be used for the FBV 115, the first valve 32, and/or the second valve 36.

FIG. 21A illustrates indications that can be provided to a user or a technician on the display 55 during normal operation of the reverse osmosis system 10. In one embodiment, a software version and the total number of operating hours can be displayed on a default screen 300. The default screen 300 can show the total number of operating hours since start-up and/or last reset. If the pressure in the storage tank 28 drops below a specified value, the reverse osmosis system 10 can initiate the production of the permeate water by opening the first valve 32. During this process, the display 55 can show the elapsed time in seconds at 305. During the flush cycle, the remaining time in seconds can be displayed at 310. At the end of the flush cycle or if the pressure in the pressure tank 28 drops below a certain value, the controller 200 can initiate the production of the permeate water. Elapsed time in seconds can be displayed at 315.

The display 55 can include buttons to program the controller 200 via user input. FIG. 21B illustrates the programmable features of the controller 200 according to one embodiment of the invention. From the default screen 300, the controller 200 can enter a program mode. Parameters that can be adjusted to user specifications during the program mode can include the duration and the interval of the flush cycle, the TDS value for the mixture outlet 135, and a calibration routine for the TDS sensor 40. The duration of the flush cycle can be entered and confirmed at 320 followed by the input of the interval of the flush cycle at 325. In one embodiment, the duration of the flush cycle can be entered in about five seconds increments, while the interval between flush cycles can be entered in about half-hour increments. At 330, it can be decided if the total operating hours should be reset. If no drink setup is selected at 335, the data entered into the controller 200 can be saved at 345. If a drink setup is selected at 335, the TDS level coming from the TDS sensor 40 can be displayed at 340. The DBV 105 and/or the FBV 115 can be adjusted until an optimal TDS reading of the permeate-feed water mixture can be achieved. For better results, the mixture can flow past the TDS sensor 40 and can exit the reverse osmosis system 10 through the mixture outlet 135. Once the DBV 105 and the FBV 115 are adjusted, the data can be saved at 345. After the saving process is completed, the default screen 300 can be displayed again and the reverse osmosis system 10 can enter its normal operation mode. In one embodiment, the TDS sensor 40 can be calibrated with help of a calibration solution at 350 before returning to the default screen 300. After successful calibration, the system can return to the default screen 300 and the reverse osmosis system 10 can enter its normal operation mode.

It will be appreciated by those skilled in the art that while the invention has been described above in connection with particular embodiments and examples, the invention is not necessarily so limited, and that numerous other embodiments, examples, uses, modifications and departures from the embodiments, examples and uses are intended to be encompassed by the claims attached hereto. The entire disclosure of each patent and publication cited herein is incorporated by reference, as if each such patent or publication were individually incorporated by reference herein. Various features and advantages of the invention are set forth in the following claims.

## Claims

1. A reverse osmosis system comprising:
a reverse osmosis module including a reverse osmosis membrane;
a boost pump to provide feed water to the reverse osmosis membrane; and
a permeate pump positioned downstream of the reverse osmosis membrane and upstream of a pressurized storage tank, the permeate pump removing permeate water from the reverse osmosis membrane;
the pressurized storage tank positioned downstream from the permeate pump and storing the permeate water, the pressurized storage tank including a bladder with pressurized air stored outside of the bladder to expel permeate water stored inside the bladder upon demand; and
a controller connected to the boost pump and the permeate pump;
the controller operating the permeate pump to direct water that has passed through the reverse osmosis membrane toward the pressurized storage tank,
the controller operating the permeate pump to decrease a first pressure on an upstream side of the permeate pump to increase a flow rate through the reverse osmosis membrane in order to increase production of the permeate water,
the controller operating the permeate pump to increase a second pressure on a downstream side of the permeate pump in order to facilitate filling of the pressurized storage tank,
the controller operating the boost pump and the permeate pump to hold a differential pressure across the membrane substantially equal to a boost pump output pressure and to isolate a downstream side of the reverse osmosis membrane from pressure inside the bladder of the pressurized storage tank allowing a membrane recovery up to about 80 percent.

2. The system of claim 1 wherein the permeate pump is operated by the controller to recycle concentrate water back into the system upstream from the reverse osmosis module and to increase a flow velocity across the reverse osmosis membrane in order to reduce scaling.

3. The system of claim 1 wherein the permeate pump is operated by the controller to improve flushing of the reverse osmosis membrane.

4. The system of claim 1 in which the boost pump and the permeate pump are driven by a common motor with two output shafts.

5. The system of claim 1 wherein the common motor is one of a variable speed electric motor and a brushless DC motor.
